(19) Europäisches Patentamt
European Patent Office
Office européen des brevets

(11) **EP 4 765 233 A1**

(12) **EUROPEAN PATENT APPLICATION**
published in accordance with Art. 153(4) EPC

(43) Date of publication:
**24.06.2026 Bulletin 2026/26**

(21) Application number: **25808029.0**

(22) Date of filing: **20.05.2025**

(51) International Patent Classification (IPC):
*H01M 4/134* (2010.01)    *H01M 4/1395* (2010.01)
*H01M 4/38* (2006.01)    *H01M 4/58* (2010.01)
*H01M 10/052* (2010.01)    *H01M 10/42* (2006.01)
*H01M 10/0583* (2010.01)    *H01M 50/531* (2021.01)
*H01M 4/02* (2006.01)

(52) Cooperative Patent Classification (CPC):
H01M 4/02; H01M 4/134; H01M 4/1395;
H01M 4/38; H01M 4/58; H01M 10/052;
H01M 10/0583; H01M 10/42; H01M 50/531;
Y02E 60/10

(86) International application number:
**PCT/KR2025/006846**

(87) International publication number:
**WO 2025/244396 (27.11.2025 Gazette 2025/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.05.2024   KR 20240065416
17.07.2024   KR 20240094209**

(71) Applicant: **LG Energy Solution, Ltd.
Seoul 07335 (KR)**

(72) Inventors:
• **KIM, Hyeon Jin
Daejeon 34122 (KR)**
• **KWON, Soon Kwan
Daejeon 34122 (KR)**
• **KIM, Ki Tae
Daejeon 34122 (KR)**
• **YEON, Eungje
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ANODE, ANODE SHEET AND ELECTRODE ASSEMBLY**

(57)    An anode according to various embodiments comprises: a first metal layer formed of a lithium metal; and a second metal layer which is formed of a material other than the lithium metal and which at least partially overlaps and is bonded to the first metal layer, wherein the second metal layer can be interposed between a plurality of the first metal layers, or the first metal layer can be interposed between a plurality of the second metal layers. Other embodiments are possible.

FIG. 1

**Description**

REFERENCE TO RELATED APPLICATIONS

This application Korean Patent Application No. 10-2024-0065416 filed on May 20, 2024, Korean Patent Application No. 10-2024-0094209 filed on July 17, 2024 and Korean Patent Application No. 10-2025-0065353 filed on May 20, 2025, in the Korean Intellectual Property Office, the disclosures of which are incorporated herein by reference in their entireties.

TECHNICAL FIELD

The present disclosure relates to a negative electrode, a negative electrode sheet, and an electrode assembly.

BACKGROUND ART

Recently, the demand for mobile devices such as smartphones, tablet PCs and wireless earphones is increasing. In addition, as the development of electric vehicles, energy storage batteries, robots and satellites begins in earnest, research is actively being conducted on high-performance secondary batteries that can be repeatedly charged and discharged as an energy source.

Currently, commercially available secondary batteries include nickel-cadmium batteries, nickel-metal hydride batteries, nickel-zinc batteries and lithium secondary batteries. Among these, lithium secondary batteries have almost no memory effect compared to nickel-based secondary batteries and thus there are advantages of free charging and discharging, very low self-discharge rate, and high energy density.

SUMMARY OF THE INVENTION

Meanwhile, lithium metal batteries sometimes use lithium metal as the negative electrode (anode). Lithium metal is advantageous in increasing the energy density of batteries, but it is difficult to handle lithium metal because it is softer and more prone to sticking compared to copper (Cu), which is now mainly used.

In addition, there are cases where a release film is added and then punched using a puncher to prevent the problem of lithium metal sticking in the notching process of forming the tab of the negative electrode. In those cases, the use of the dissimilar film is uneconomical, the process speed is slowed down due to deceleration of the punching machine, and problems may arise where the remaining scrap after punching must be processed separately.

Further, in the case of applying a non-contact method (for example, using a laser) rather than a contact method such as a punching machine in the notching process, lithium fumes can be generated when energy is directly applied to lithium metal, and this may cause safety issues.

Various exemplary embodiments of the present application may provide a negative electrode, a negative electrode sheet and an electrode assembly by which efficient process is possible by a non-contact notching process, lithium fumes are not generated, and the complex problems caused by lithium metal during future bonding with leads can be reduced.

According to an exemplary embodiment of the present application, a negative electrode includes a first metal layer formed from lithium metal, and a plurality of second metal layers that are formed from a material other than the lithium metal, and bonded with a portion of the first metal layer by overlapping with the portion of the first metal layer, wherein the first metal layer is interposed between the plurality of second metal layers.

In the negative electrode according to an exemplary embodiment of the present application, the plurality of second metal layers may be formed of a metal having lower reactivity than the lithium metal.

In the negative electrode according to an exemplary embodiment of the present application, each of the plurality of second metal layers may include a first region overlapping with the first metal layer and a second region that is a region other than the first region, and at least one of the plurality of second metal layers may be formed in order for a width direction length of the first region to be shorter than a width direction length of the second region.

In the negative electrode according to an exemplary embodiment of the present application, a first region of at least one of the plurality of second metal layers may be embedded in the first metal layer.

In the negative electrode according to an exemplary embodiment of the present application, first regions of the plurality of second metal layers may have a width direction length practically identical to each other.

In the negative electrode according to an exemplary embodiment of the present application may include a negative electrode tab that is formed in a second region of at least one of the plurality of second metal layers.

In the negative electrode according to an exemplary embodiment of the present application may include a margin region that is a region other than a region corresponding to the negative electrode tab at the second region of the at least one of the plurality of second metal layers.

According to an exemplary embodiment of the present application, a negative electrode includes a plurality of first metal layers that are formed from lithium metal, a second metal layer that is formed from a material other than the lithium metal, includes a first region overlapping with at least one of the plurality of first metal layers and a second region that is a region other than the first region, is interposed between the plurality of first metal layers, and is bonded with the plurality of first metal layers, and a margin region that is provided to be adjacent to at least one of the plurality of first metal layers in the second region.

In the negative electrode according to an exemplary embodiment of the present application, the second metal layer may be formed of a metal having lower reactivity than the lithium metal.

In the negative electrode according to an exemplary embodiment of the present application, the negative electrode may further include a negative electrode tab that is formed in the second region.

In the negative electrode according to an exemplary embodiment of the present application, when viewed from a thickness direction of one of the first metal layers, at least a portion of the margin region may be provided between the negative electrode tab and the one of the first metal layers, or provided between the negative electrode tab and the first region.

In the negative electrode according to an exemplary embodiment of the present application, at least a portion of the first region may include one or more of a predetermined pattern structure and a surface-treated region.

In the negative electrode according to an exemplary embodiment of the present application, a width direction length of the first region may be formed shorter than a width direction length of the second region.

According to an exemplary embodiment of the present application, a negative electrode sheet includes a first metal layer and a second metal layer that is bonded with a portion of one edge of the first metal layer by overlapping with the portion, wherein the second metal layer includes a first region overlapping the first metal layer and a second region that is a region other than the first region, and wherein a negative electrode tab including a first tab, a second tab and a third tab is formed in the second region, each of the second tab and the third tab that are adjacent to each other on both sides based on the first tab is positioned a predetermined distance apart from the first tab, and a first length that is a gap between the first tab and the second tab is formed longer than a second length between the first tab and the third tab.

In the negative electrode sheet according to an exemplary embodiment of the present application, the second metal layer may be formed of a metal material having lower reactivity than the first metal layer.

According to an exemplary embodiment of the present application, an electrode assembly includes a positive electrode, a negative electrode and a separator, wherein the negative electrode includes a first metal layer that is formed from lithium metal and a second metal layer that is bonded with a portion of one edge of the first metal layer by overlapping the portion, wherein the second metal layer is formed of a metal having lower reactivity than the lithium metal, and the negative electrode forms a negative electrode structure by being interposed between two of the separators, wherein the negative electrode structure includes a stack part and a folded part, and includes a structure in which the stack part and the positive electrode are stacked sequentially and alternately.

In the electrode assembly according to an exemplary embodiment of the present application, a plurality of stack parts and a plurality of folded parts may be provided.

In the electrode assembly according to an exemplary embodiment of the present application, the negative electrode may include a plurality of second metal layers, and the first metal layer may be interposed between the plurality of second metal layers.

In the electrode assembly according to an exemplary embodiment of the present application, the negative electrode may include a plurality of first metal layers, and the second metal layer may be interposed between the plurality of first metal layers.

In the electrode assembly according to an exemplary embodiment of the present application, the positive electrode may include a positive electrode active material layer including a positive electrode active material and a positive electrode collector configured to support the positive electrode active material layer, and the positive electrode active material may include a sulfur compound.

According to the exemplary embodiments, it is possible to minimize the occurrence of defects that may occur in the manufacturing process of batteries that use lithium metal as the main negative electrode material and to provide a negative electrode, negative electrode sheet, or electrode assembly that maximizes energy density. For example, an efficient process is possible by performing a non-contact notching process, lithium fumes are not generated, and complex problems caused by lithium metal during the future lead and bonding process may be improved.

BRIEF DESCRIPTION OF DRAWINGS

The drawings illustrated in the present application are according to mere exemplary embodiments, and the ratio of the width, the length and the height (or the thickness) of each element is for detailed descriptions for the exemplary embodiments, and thus the ratio may differ from reality. Further, in the coordinate system illustrated in the drawings, each axis may be perpendicular to each other, and the direction the arrow points may be the + direction, and the direction opposite to the direction indicated by the arrow (rotated by 180 degrees) may be the - direction.

FIG. 1 is a plan view illustrating at least a portion of a negative electrode according to an exemplary embodiment of the present application.

FIG. 2 and FIG. 3 are perspective views illustrating a part of the manufacturing process of a negative electrode sheet according to a first exemplary embodiment of the present application.

FIG. 4 to FIG. 6 are perspective views illustrating a part of the manufacturing process of a negative electrode sheet according to a second exemplary embodiment of the present application.

FIG. 7 is a perspective view illustrating a part of the manufacturing process of a negative electrode sheet according to a third exemplary embodiment of the present application.

FIG. 8 is a perspective view illustrating a part of the manufacturing process of a negative electrode sheet according to an exemplary embodiment of the present application.

FIG. 9 is a plan view of FIG. 8, and illustrates a part of the manufacturing process of a negative electrode sheet according to an exemplary embodiment of the present application.

FIG. 10 is a plan view illustrating at least a portion of a negative electrode sheet according to an exemplary embodiment of the present application.

FIG. 11 is a plan view exemplarily illustrating a negative electrode formed by cutting a negative electrode sheet in an exemplary embodiment of the present application.

FIG. 12 is a plan view illustrating at least a portion of a negative electrode according to an exemplary embodiment of the present application.

FIG. 13 and FIG. 14 are perspective views illustrating a part of the manufacturing process of a negative electrode sheet according to a fourth exemplary embodiment of the present application.

FIG. 15 to FIG. 17 are perspective views illustrating a part of the manufacturing process of a negative electrode sheet according to a fifth exemplary embodiment of the present application.

FIG. 18 is a perspective view illustrating a part of the manufacturing process of a negative electrode sheet according to a sixth exemplary embodiment of the present application.

FIG. 19 and FIG. 20 are perspective views illustrating a part of the manufacturing process of a negative electrode sheet according to an exemplary embodiment of the present application.

FIG. 21 is a plan view of FIG. 20, illustrating a part of a manufacturing process of a negative electrode sheet according to an exemplary embodiment of the present application.

FIG. 22 is a plan view illustrating at least a portion of a negative electrode sheet according to an exemplary embodiment of the present application.

FIG. 23 is a plan view illustrating a negative electrode formed by cutting a negative electrode sheet in an exemplary embodiment of the present application.

FIG. 24 is a plan view illustrating at least a portion of a negative electrode according to an exemplary embodiment of the present application.

FIG. 25 and FIG. 26 are perspective views illustrating a part of the manufacturing process of a negative electrode sheet according to a seventh exemplary embodiment of the present application.

FIG. 27 to FIG. 29 are perspective views illustrating a part of the manufacturing process of a negative electrode sheet according to an eighth exemplary embodiment of the present application.

FIG. 30 is a perspective view illustrating a part of the manufacturing process of a negative electrode sheet according to a ninth exemplary embodiment of the present application.

FIG. 31 and FIG. 32 are perspective views illustrating a part of the manufacturing process of a negative electrode sheet according to an exemplary embodiment of the present application.

FIG. 33 is a plan view of FIG. 32, and illustrates a part of the manufacturing process of a negative electrode sheet according to an exemplary embodiment of the present application.

FIG. 34 is a plan view illustrating at least a portion of a negative electrode sheet according to an exemplary embodiment of the present application.

FIG. 35 is a plan view exemplarily illustrating a negative electrode formed by cutting a negative electrode sheet in an exemplary embodiment of the present application.

FIG. 36 is a plan view illustrating at least a portion of an electrode assembly according to an exemplary embodiment of the present application.

## DETAILED DESCRIPTION

Prior to the detailed description of the present disclosure, terms or words used in the specification and claims may not be construed as limited to their common or dictionary meanings. Further, the terms or words should be interpreted with meaning and concept consistent with the technical idea of the present disclosure based on the principle that the inventor may appropriately define the concept of terms in order to explain his or her invention in the best way. The exemplary embodiments described in this specification and the configurations shown in the drawings are only the most preferred embodiments of the present disclosure, and do not necessarily represent the entire technical idea of the present disclosure. Accordingly, at the time of filing the present disclosure, there may be various equivalents and modifications that can replace them.

The same reference numeral or sign shown in each drawing attached to the specification may represent parts or components that perform substantially the same function. For convenience of description and understanding, different embodiments may be described using the same reference numerals or symbols. In other words, even if a component or an element having the same reference numeral is shown in multiple drawings, the multiple drawings may not all represent one exemplary embodiment.

In the following description, singular expressions include plural expressions unless the context clearly dictates otherwise. It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. The terms "have," "may have," "include," and "may include" as used herein indicate the presence of corresponding features (for example, elements such as numerical values, functions, operations, or parts), and do not preclude the presence of additional features.

Further, in the following description, expressions such as an upper side, top, a lower side, bottom, a side, front and a back side are expressed based on the direction shown in the drawing. If the direction of the object changes, it may be expressed differently.

Further, in the specification and claims, terms including ordinal numbers followed by a dash, such as "1-1," "1-2," etc., may be used to distinguish between components or elements. These ordinal numbers are used to distinguish identical or similar components from each other, and the meaning of the terms should not be interpreted limitedly due to the use of such ordinal numbers. For example, components or elements combined with these ordinal numbers should not be interpreted as having a limited order of use or arrangement based on the number.

In this specification, battery may be used with the same meaning as cell. Additionally, a battery or cell may be a general term for a battery cell, which is a unit thereof, a battery module including a battery cell, or a battery pack.

The present application may provide at least one of a negative electrode, a negative electrode sheet and an electrode assembly by which an efficient process is possible by performing a non-contact notching process, lithium fumes are not generated, and complex problems caused by lithium metal during the future lead and bonding process may be improved.

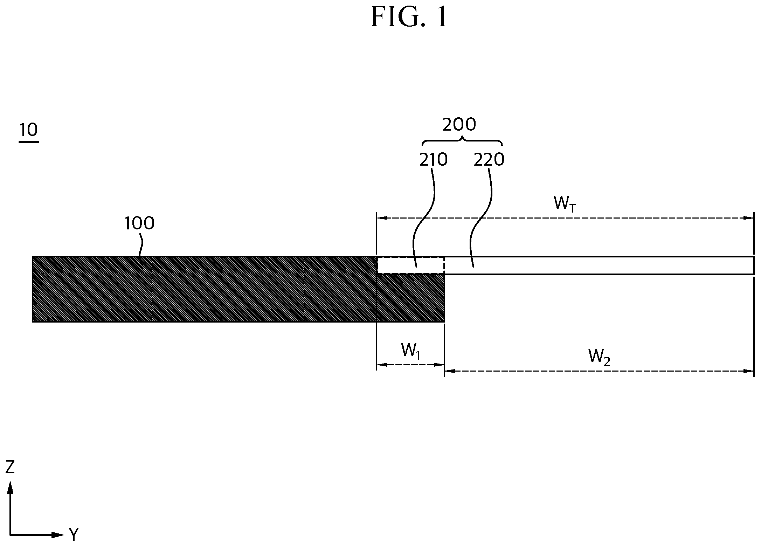

FIG. 1 is a plan view illustrating at least a portion of a negative electrode 10 according to an exemplary embodiment of the present application.

According to one exemplary embodiment, the negative electrode 10 may include a first metal layer 100 and a second metal layer 200.

In the negative electrode 10 according to one exemplary embodiment, the second metal layer 200 may be bonded and formed by overlapping with a portion of the first metal layer 100.

For example, the second metal layer 200 may protrude in one direction from one edge of the first metal layer 100.

Also, for example, in the negative electrode 10, the second metal layer 200 may be bonded and formed by overlapping with a portion of one edge of the first metal layer 100.

In an exemplary embodiment of the negative electrode 10, the second metal layer 200 may be formed of a metal having lower reactivity than the first metal layer 100.

For example, the first metal layer 100 may be formed of lithium metal (Li metal). The second metal layer 200 may be formed of a material other than lithium metal.

For example, the second metal layer 200 may be formed of another metal having lower reactivity than lithium (Li) metal.

For example, the second metal layer 200 may be formed of at least one of copper (Cu), nickel (Ni) and stainless steel.

In one exemplary embodiment, the second metal layer 200 may have various structures. Each of the second metal layers 200 may include one or more of a predetermined pattern structure and a surface-treated region. One or more of the predetermined pattern structure and surface-treated regions may be included in at least a portion of a first region 210.

For example, at least a portion of the second metal layer 200 (for example, at least a portion of the area that is in contact with the first metal layer 100) may include a predetermined pattern structure. The pattern structure may be, for example, a mesh structure, or a structure in which a grid pattern is formed on the surface, and may have all of the structures. For example, a mesh structure may indicate a structure in which a plurality of holes are formed, and a grid pattern may indicate a structure in which a plurality of grooves are formed. Through this, the contact area between the first metal layer 100 and the second metal layer 200 may be maximized, thereby improving bonding strength.

Additionally, at least a portion of the second metal layer 200 (for example, at least a portion of the area of the second metal layer 200 that contacts the first metal layer 100) may be surface treated. The surface treatment may be performed by, for example, plasma treatment. When surface treated, it may have a different surface roughness than other areas. Through such appropriate surface treatment, the bonding strength between the first metal layer 100 and the second metal layer 200 may be improved. In the present disclosure, reactivity may indicate the property of being oxidized and becoming a cation, and low reactivity may indicate a relatively low tendency to become a cation.

Meanwhile, in the negative electrode 10 according to the exemplary embodiment, the second metal layer 200 may be formed of a metal of a material that does not readily react when in contact with the first metal layer 100.

For example, the second metal layer 200 may not include aluminum (Al) that may undergo an alloying reaction with lithium metal. In this specification, the meaning of not including a particular substance is substantially non-inclusive, and "substantially non-inclusive" preferably means 0 wt%, but, for example, it may indicate containing less than 1 wt%, less than 0.5 wt%, or less than 0.1 wt% of the total weight.

In the negative electrode 10 according to an exemplary embodiment, the second metal layer 200 may include the first region 210 (for example, an overlapping region) that overlaps the first metal layer 100 and a second region 220 (for example, a non-overlapping region) that is a region other than the first region 210. For example, based on the thickness direction of the first metal layer 100 (for example, the +Z axis direction of FIG. 1), the second metal layer 200 may include the first region 210 (for example, the overlapping region) that overlaps the first metal layer 100 and the second region 220 (for example, the non-overlapping region) that is a region other than the first region 210 (in other words, a region that does not overlap the first metal layer 100).

In other words, in this specification, unless otherwise specified, the first region 210 of the second metal layer 200 indicates an overlapping region in which multiple elements are overlapped, and the second region 220 of the second metal layer 200 may indicate a non-overlapping region other than the first region 210.

In this specification, the thickness of the first metal layer 100 is not particularly limited, but the thickness may be, for example, 10 $\mu$m to 200 $\mu$m, 15 $\mu$m to 180 $\mu$m, 20 $\mu$m to 150 $\mu$m, 25 $\mu$m to 130 $\mu$m, 30 $\mu$m to 100 $\mu$m, 35 $\mu$m to 80 $\mu$m or 40 $\mu$m to 60 $\mu$m for free-standing. Further, in this specification, the thickness of the second metal layer 200 is not particularly limited, but the thickness may be, for example, 5 $\mu$m to 20 $\mu$m, 6 $\mu$m to 18 $\mu$m, 7 $\mu$m to 16 $\mu$m, 8 $\mu$m to 14 $\mu$m, or 9 $\mu$m to 12 $\mu$m, or may be 10 $\mu$m or less to enhance energy density. In this specification, thickness may indicate the length along the thickness direction described above (for example, the +Z axis direction of FIG. 1) unless otherwise defined.

In an exemplary embodiment, the thickness of the first metal layer 100 may be greater than the thickness of the second metal layer 200. Through this, the tensile strength of the negative electrode 10 may be improved.

According to an exemplary embodiment, length $W_1$ in the first direction (for example, the width direction) (for example, the +Y axis direction of FIG. 1) of the first region 210 may be shorter than length $W_2$ in the first direction (for example, the width direction) of the second region 220.

For example, if the width direction length $W_1$ of the first region 210 is excessively short, there may be difficulties in ensuring bonding stability between the first metal layer 100 and the second metal layer 200, and conversely, if it is excessively long, it may incur unnecessary manufacturing costs and lower the energy density of the battery. Accordingly, the width direction length $W_1$ of the first region 210 according to the exemplary embodiment may be about 0.5 mm to 20 mm.

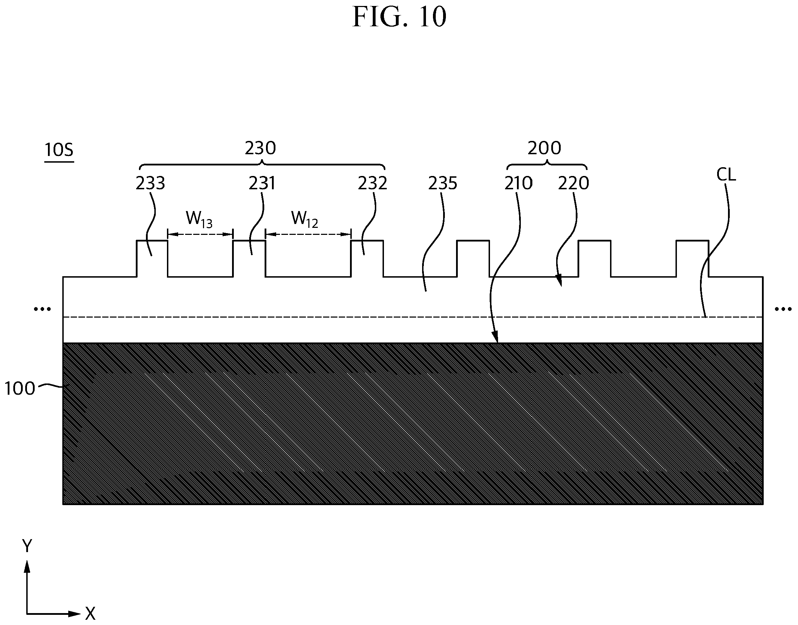

For example, the width direction length $W_2$ of the second region 220 may be longer than the minimum length (for example, about 8 mm) of a negative electrode tab (for example, see 230 in FIG. 10) required for bonding to the negative electrode lead. As such, when the width direction length $W_2$ of the second region 220 in the negative electrode 10 according to the exemplary embodiment is formed longer than the minimum required length of the negative electrode tab, by performing the process for forming a negative electrode tab only in the second region 220 and not performing a separate process for forming a negative electrode tab in the first region 210, damage to the first metal layer 100 may be prevented.

In an exemplary embodiment, in the negative electrode 10, a ratio ($W_2/W_1$) of the width direction length $W_2$ of the second region 220 and the width direction length $W_1$ of the first region 210 may be greater than 1 and less than or equal to 20.

In the negative electrode 10 according to another exemplary embodiment, the ratio ($W_2/W_1$) of the width direction length $W_2$ of the second region 220 to the width direction length $W_1$ of the first region 210 may be 2 or more and 18 or less.

In another exemplary embodiment, in the negative electrode 10, the ratio ($W_2/W_1$) of the width direction length $W_2$ of the second region 220 to the width direction length $W_1$ of the first region 210 may be 5 or more and 16 or less.

In the negative electrode 10 according to various exemplary embodiments of the present disclosure, by the ratio ($W_2/W_1$) of the width direction length $W_2$ of the second region 220 and the width direction length $W_1$ of the first region 210 satisfying a predetermined range, the size of the negative electrode 10 may be minimized and the capacity may be maximized.

In the negative electrode 10 according to an exemplary embodiment, the ratio ($W_1/W_T$) of the width direction length $W_1$ of the first region 210 to the width direction length $W_1$ of the entire second metal layer 200 may be 0.01 to 0.1.

In the negative electrode 10 according to an exemplary embodiment, the ratio ($W_1/W_1$) of the width direction length $W_1$ of the first region 210 to the width direction length $W_1$ of the entire second metal layer 200 may be 0.02 to 0.09.

In the negative electrode 10 according to an exemplary embodiment, the ratio ($W_1/W_1$) of the width direction length $W_1$ of the first region 210 to the width direction length $W_1$ of the entire second metal layer 200 may be 0.03 to 0.08.

In the negative electrode 10 according to an exemplary embodiment, the ratio ($W_1/W_1$) of the width direction length $W_1$ of the first region 210 to the width direction length $W_1$ of the entire second metal layer 200 may be 0.04 to 0.07.

In various exemplary embodiments of the present disclosure, by the ratio ($W_1/W_1$) of the width direction length $W_1$ of the first region 210 and the width direction length $W_1$ of the entire second metal layer 200 satisfying a certain range condition, sufficient bonding strength may be secured between the first metal layer 100 and the second metal layer 200.

In an exemplary embodiment of the negative electrode 10, the first region 210 of the second metal layer 200 may be embedded in the first metal layer 100.

For example, the first surface (for example, an upper surface) of the second metal layer 200 and the first surface (for example, an upper surface) of the first metal layer 100 may be formed to be positioned substantially on the same plane.

For example, by the first region 210 being embedded in the first metal layer 100, the second metal layer 200 may not include an upper step between the second metal layer 200 and the first metal layer 100.

Even when the first metal layer 100 and the second metal layer 200 are bonded and then rewound through this form, the problem of meandering movement, which is a misalignment between two metal layers (the first metal layer 100, the second metal layer 200), as well as the problem of electrode twisting due to meandering movement may be effectively prevented.

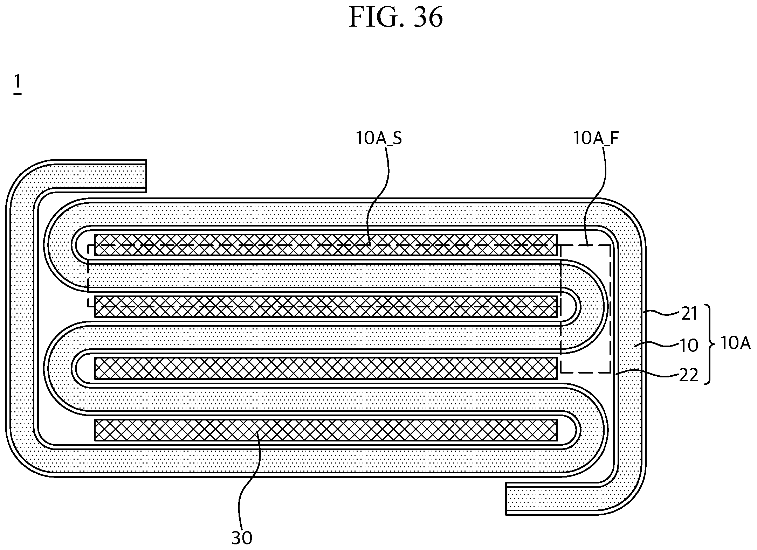

In addition, after rewinding as described above through this form, when unwinding is performed to manufacture the negative electrode structure described later (for example, see 10A of FIG. 36), the problem of meandering movement of the first metal layer 100 and the second metal layer 200 may be prevented.

In addition, in this form, if there is a step between the upper surface of the first metal layer 100 and the second metal layer 200 (especially, if it is thicker than the thickness of a positive electrode (see 30 of FIG. 36) to be described later), prevented is the problem of the energy density per volume of the battery cell being reduced due to a stack part 10A_S of the negative electrode structure (for example, see a negative electrode structure 10A of FIG. 36) protruding excessively.

In the negative electrode 10 according to an exemplary embodiment, the negative electrode tab (see 230 in FIG. 10) may be formed in the second region 220 of the second metal layer 200. For example, by performing a notching process on the second region 220 of the second metal layer 200, the negative electrode tab (see 230 in FIG. 10) may be formed. In other words, the negative electrode 10 may include the negative electrode tab (see 230 of FIG. 10) formed in the second region 220 of the second metal layer 200.

In the negative electrode 10 according to an exemplary embodiment, a plurality of negative electrode tabs (see 230 in FIG. 10) may be formed. Here, the notching process is not particularly limited, but may be performed by a contact method such as, for example, a puncher, or a non-contact method utilizing a laser. The negative electrode 10 may include the plurality of negative electrode tabs (230 of FIG. 10) formed in the second region 220 of the second metal layer 200.

In various exemplary embodiments, the second metal layer 200 is formed of a metal having relatively lower reactivity than lithium metal, and thus even if the notching process is performed in a non-contact manner, the occurrence of safety problems due to fumes may be minimized.

Meanwhile, the negative electrode 10 according to various exemplary embodiments of the present disclosure may indicate a negative electrode sheet (for example, a negative electrode sheet 10S of FIG. 10) used to manufacture a plurality of electrode assemblies, or may refer to a negative electrode sheet cut to a certain size to be used for manufacturing one electrode assembly or one battery cell, that is, a part of the negative electrode sheet.

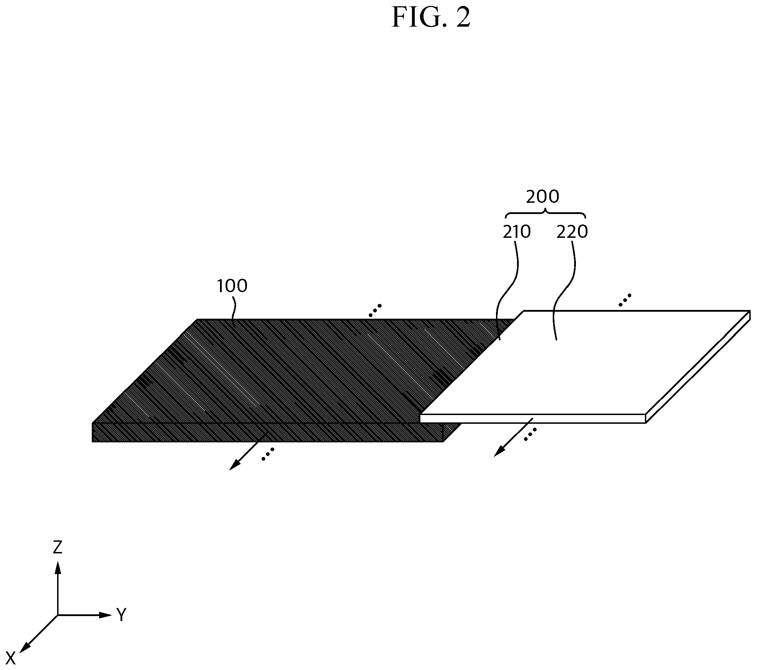

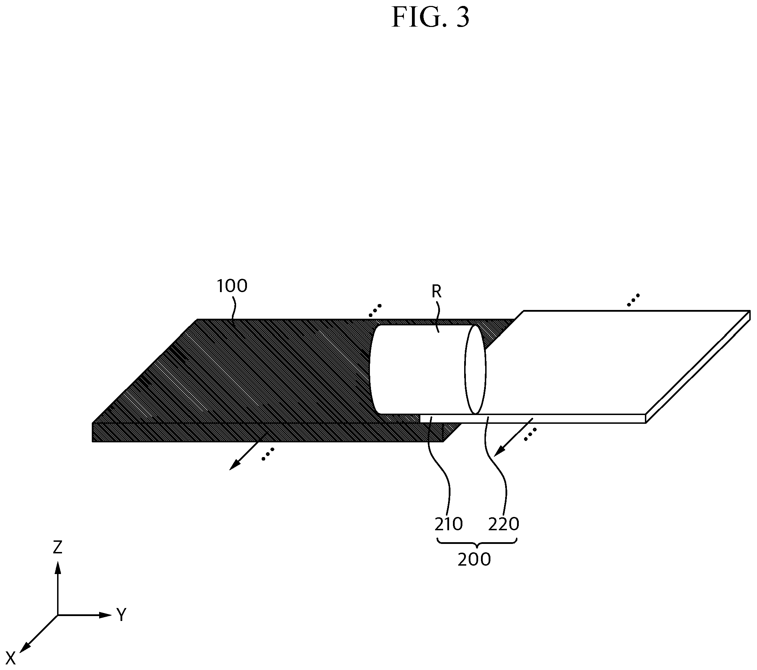

FIG. 2 and FIG. 3 illustrate a part of the manufacturing process of the negative electrode sheet (see 10S of FIG. 10) according to a first exemplary embodiment of the present application.

Meanwhile, at least a part of the manufacturing process of the negative electrode sheet (see 10S of FIG. 10) may be performed in the roll-to-roll manner. The roll-to-roll manner may be one of the continuous processes in which a sheet-shaped material is tensioned by rolls (for example, unwinding rolls and rewinding rolls) to give the negative electrode sheet a new function. The roll-to-roll manner may be advantageous for mass production because it processes materials continuously. The description on the negative electrode 10 in the specification may be referenced to for description on the negative electrode sheet (see 10S of FIG. 10), unless contradictory.

The first metal layer 100 according to one exemplary embodiment may be in the form of a sheet, and may be transported in a specific direction via transport rolls (not illustrated). For example, referring to FIG. 2, the first metal layer 100 may be transferred in the +X direction.

Unless otherwise specified in this specification, the direction parallel to the direction in which the first metal layer 100 is transferred may be referred to as machine direction MD. For example, the machine direction of the first metal layer 100 in FIG. 2 may be in the +X direction (or the -X direction). Further, unless otherwise specified in this specification, the direction perpendicular to the machine direction MD on a plane parallel to the first metal layer 100 may be referred to as transverse direction TD. For example, the transverse direction of the first metal layer 100 in FIG. 2 may indicate the +Y direction (or the -Y direction).

The second metal layer 200 according to one exemplary embodiment may be in the form of a sheet. For example, the second metal layer 200 may be positioned over the first metal layer 100 so as to overlap a portion of one edge of the first metal layer 100 and may be conveyed in the same direction (in other words, the machine direction) as the first metal layer 100 via a conveying roll (not illustrated). For example, referring to FIG. 2, the second metal layer 200 may be transferred in the +X direction, similar to the direction in which the first metal layer 100 is transferred.

A method for manufacturing the negative electrode sheet (see 10S of FIG. 10) according to one exemplary embodiment may include providing the first metal layer 100 and the second metal layer 200. At least one of the first metal layer 100 and the second metal layer 200 may be provided in the roll-to-roll manner described above.

In one exemplary embodiment, referring to FIG. 3, the first metal layer 100 and the second metal layer 200 may be rolled simultaneously by a roller R. Specifically, the roller R may apply pressure to the overlapping area of the first metal layer 100 and the second metal layer 200 to bond them. The roller R is positioned on the thickness direction (for example, the +Z axis direction) of the overlapping portion of the first metal layer 100 and the second metal layer 200 so as to simultaneously pressurize the first metal layer 100 and the second metal layer 200. Meanwhile, unless otherwise limited in this specification, the thickness direction may be perpendicular to both the machine direction MD and the transverse direction TD.

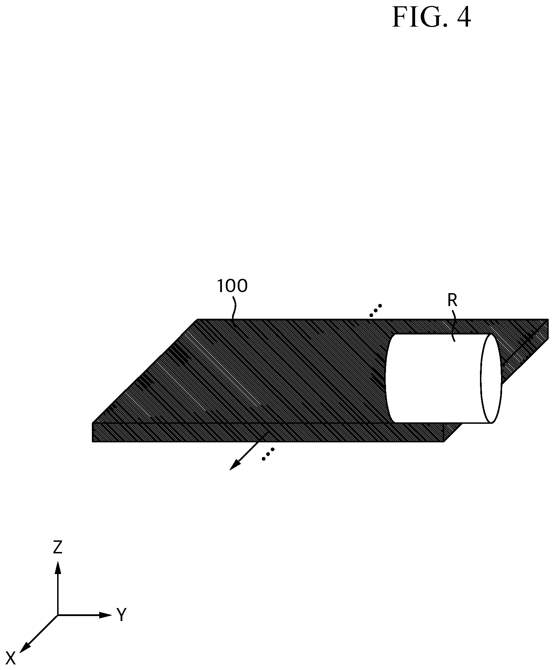

FIG. 4 to FIG. 6 illustrate a part of the manufacturing process of the negative electrode sheet (see 10S of FIG. 10) according to a second exemplary embodiment of the present application.

Referring to FIG. 4, in a method for manufacturing a negative electrode sheet according to an exemplary embodiment, the roller R may roll a portion of one edge of the first metal layer 100, which is transported in the +X axis direction. In this case, unlike what is described with reference to FIG. 3, the object rolled by the roller R may be the first metal layer 100 before being overlapped with the second metal layer 200.

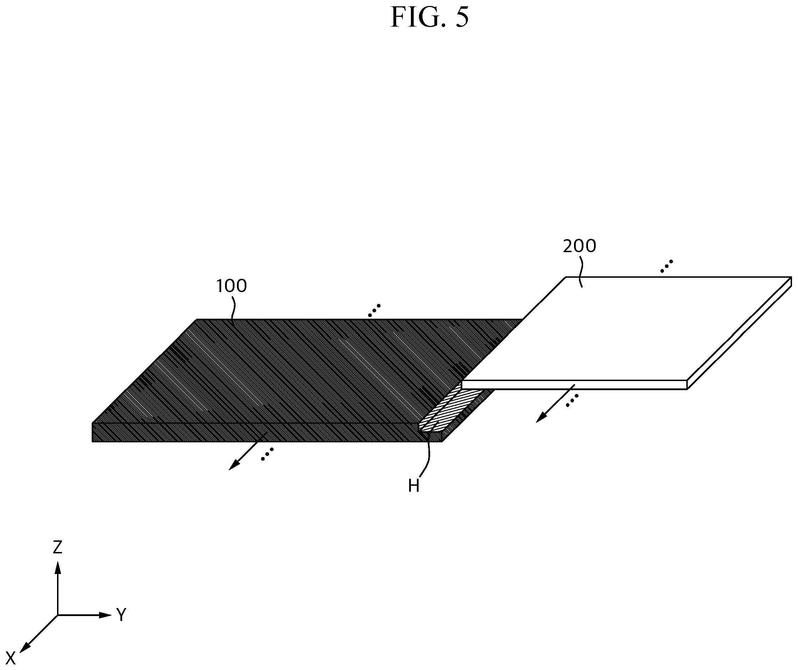

Referring to FIG. 5, a groove H may be formed in the first metal layer 100 by the pressure of the roller R, and the second metal layer 200 may be positioned at a position corresponding to the formed the groove H.

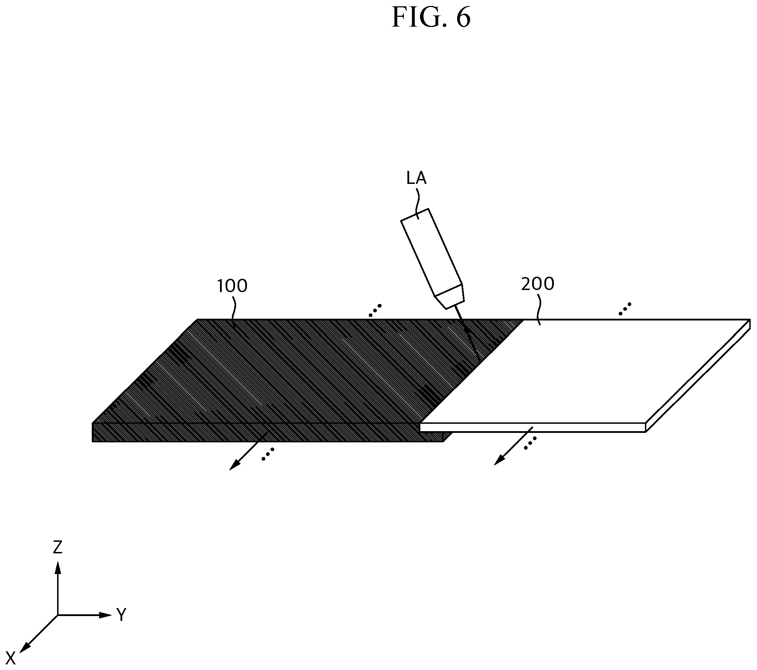

Referring to FIG. 6, after the second metal layer 200 is placed in the groove H of the first metal layer 100, the first metal layer 100 and the second metal layer 200 may be mutually bonded by a bonding means such as a laser apparatus LA. FIG. 6 illustrates an example of the laser apparatus LA as a bonding means, but other bonding means in various exemplary embodiments of the present disclosure are not limited thereto, and a welding device or the like may be used as the bonding means.

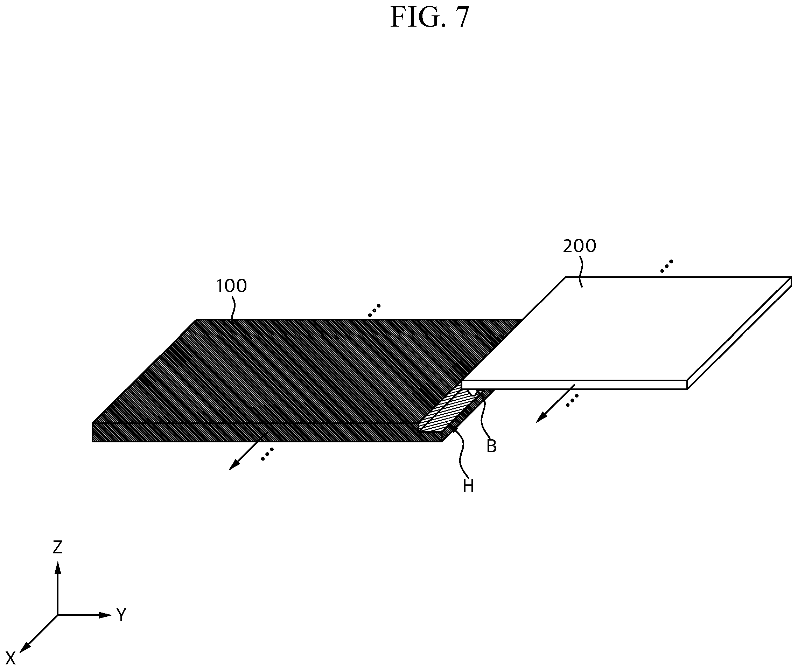

FIG. 7 illustrates a part of the manufacturing process of the negative electrode sheet (see 10S of FIG. 10) according to a third exemplary embodiment of the present application.

Referring to FIG. 7, according to various exemplary embodiments, the first metal layer 100 and the second metal layer 200 in the negative electrode sheet may be bonded using binder B. For example, as illustrated in FIG. 4, after the roller R rolls a portion of one edge area of the first metal layer 100, the binder B may be applied onto the groove H formed by rolling, and by the second metal layer 200 being placed at a position corresponding to the groove H where the binder B is applied, the first metal layer 100 and the second metal layer 200 may be bonded.

In an exemplary embodiment, the binder B may be formed of a material that has a predetermined adhesive strength without chemically reacting with one or more of the first metal layer 100 and the second metal layer 200.

The binder B may include one or more selected from the group consisting of, for example, polyvinylidene fluoride-co-hexafluoropropylene, polyvinylidene fluoride-co-trichloroethylene, polymethylmethacrylate, polyacrylonitrile, polyvinylpyrrolidone, polyvinyl acetate, polyethylene-co-vinyl acetate, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, acrylonitrile-styrene-butadiene copolymer, polyimide and styrene-butadiene rubber (SBR).

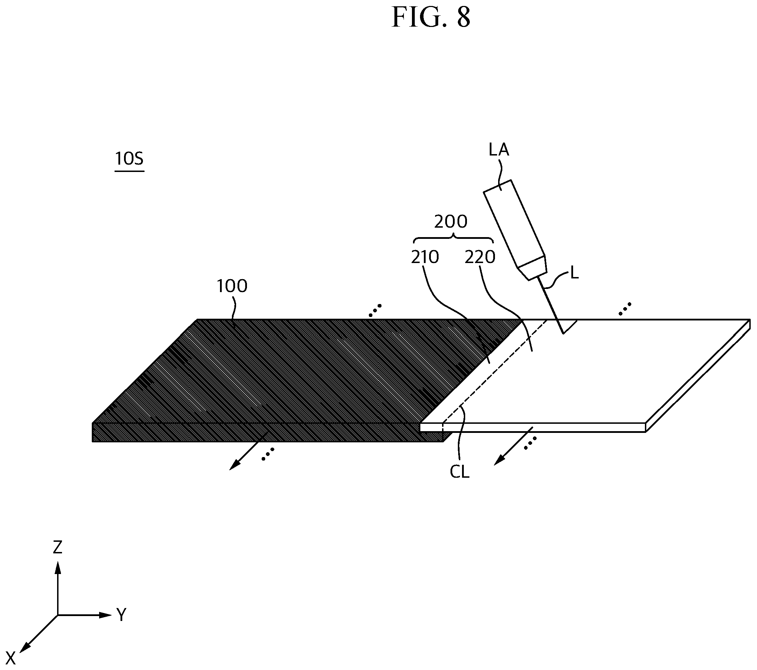

FIG. 8 illustrates a part of the manufacturing process of the negative electrode sheet 10S according to an exemplary embodiment of the present application. Unless otherwise specified in this specification, the negative electrode sheet 10S may indicate a state in which the first metal layer 100 and the second metal layer 200 are bonded. Here, the bonded state does not simply indicate a state in which the first metal layer 100 and the second metal layer 200 are in surface contact, but may also indicate a state in which the second metal layer 200 is attached to the first metal layer 100 by a mechanical or chemical bonding method (for example, rolling, laser bonding, binder bonding, etc.).

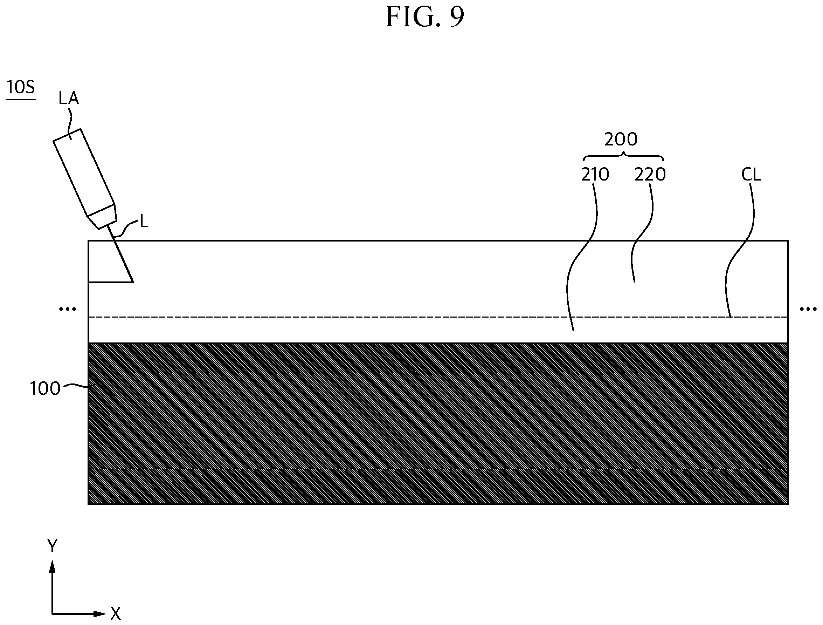

FIG. 9 is a plan view of FIG. 8, and illustrates a part of the manufacturing process of the negative electrode sheet 10S according to an exemplary embodiment of the present application.

Referring to FIG. 8, according to an exemplary embodiment, the first metal layer 100 and the second metal layer 200 may be bonded to each other to form the bonding boundary line CL.

A method for manufacturing the negative electrode sheet 10S according to one exemplary embodiment may include bonding the first metal layer 100 and the second metal layer 200 to each other and forming the bonding boundary line CL by bonding the first metal layer 100 and the second metal layer 200 to each other.

The bonding boundary line CL may correspond to, for example, the end of the first metal layer 100 overlapping the second metal layer 200. For example, the bonding boundary line CL may correspond to a line that overlaps the second metal layer 200 among the ends of the first metal layer 100, based on the thickness direction of the first metal layer 100 (for example, the +Z axis direction in FIG. 8).

Referring to FIG. 8 and FIG. 9, for the negative electrode sheet 10S according to an exemplary embodiment, a notching process may be performed using the laser apparatus LA.

For example, laser L generated from the laser apparatus LA may be irradiated to the second region 220 of the second metal layer 200, and accordingly, the second region 220 may be partially cut to form the negative electrode tab (see 230 in FIG. 10).

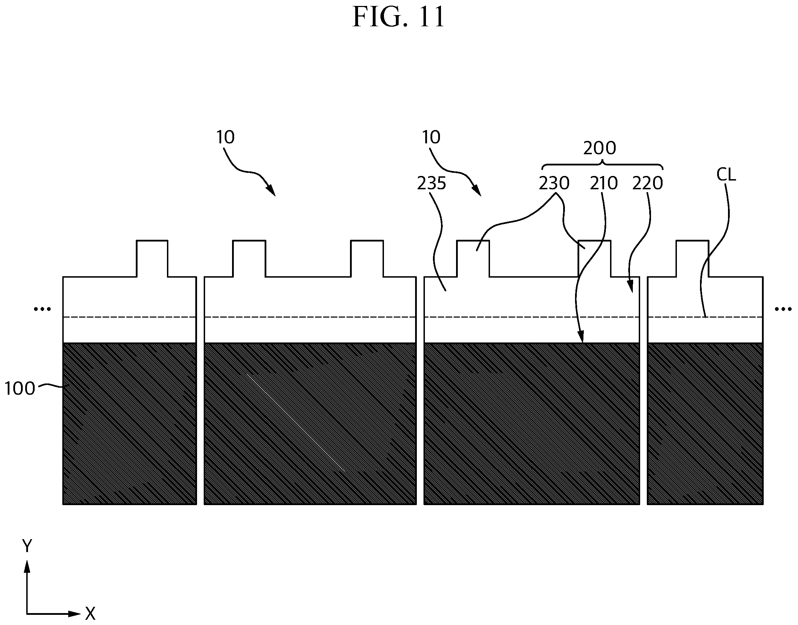

FIG. 10 is a plan view illustrating at least a portion of the negative electrode sheet 10S according to an exemplary embodiment of the present application. FIG. 11 is a plan view exemplarily illustrating the negative electrode 10 formed by cutting the negative electrode sheet (see 10S of FIG. 10) in an exemplary embodiment of the present application.

According to one exemplary embodiment, in the negative electrode sheet 10S, the negative electrode tab 230 including a first tab 231, a second tab 232 and a third tab 233 may be formed in the second region 220. In other words, the negative electrode sheet 10S according to the exemplary embodiment may include the negative electrode tab 230 formed in the second region 220.

For example, each of the second tab 232 and the third tab 233, which are adjacent to each other on both sides of the first tab 231, may be positioned a predetermined distance apart from the first tab 231.

For example, a first length $W_{12}$, which is the gap between the first tab 231 and the second tab 232, may be formed longer than a second length $W_{13}$, which is the gap between the first tab 231 and the third tab 233. The structure allows for different spacing between tabs, and thus the structure may be advantageous in aligning tabs when manufacturing a negative electrode structure (see 10A of FIG. 36) including a folded part and a stack part to be described later.

Meanwhile, the negative electrode sheet 10S according to one exemplary embodiment may further include a margin region 235, which is a region other than the region corresponding to the negative electrode tab 230 in the second region 220. Referring to FIG. 10, at least a portion of the margin region 235 may be provided between the negative electrode tab 230 and the first metal layer 100. For example, when viewed in the thickness direction (in other words, the +Z axis direction) of the first metal layer 100, at least a portion of the margin region 235 may be provided between the negative electrode tab 230 and the first metal layer 100. Further, referring to FIG. 10, at least a portion of the margin region 235 may be provided between the negative electrode tab 230 and the first region 210.

For example, when viewed from the thickness direction (in other words, the +Z axis direction) of the first metal layer 100, at least a portion of the margin region 235 may be provided between the negative electrode tab 230 and the first region 210. In other words, referring to FIG. 10, the first region 210 may be provided between the margin region 235 and the first metal layer 100. When viewed from the thickness direction (in other words, the +Z axis direction) of the first metal layer 100, the first region 210 may be provided between the margin region 235 and the first metal layer 100. Through this, even if the manufacturing process of the negative electrode sheet 10S is performed in a roll-to-roll manner, the elongation of the first metal layer 100, which is lithium metal, along the machine direction MD is suppressed and beneficial effects may be obtained in the continuous notching process.

In other words, according to one exemplary embodiment, the negative electrode sheet 10S may include the margin region 235 which is a part of the second region 220. For example, the margin region 235 may be provided adjacent to the first metal layer 100. Here, the margin region 235 may be a region other than the region where the negative electrode tab 230 is formed by the notching process in the second region 220. Further, here, the negative electrode sheet 10S may be in a state where the negative electrode tab 230 is not formed, and a plurality of negative electrode sheets 10S may be laminated along one direction (for example, the thickness direction of the first metal layer 100 (in other words, the +Z axis direction)) or in a curved state (folded) and the notching process may be performed at once to form the negative electrode tab 230. This simplifies the process and minimizes the tab alignment mismatch phenomenon that occurs when forming the negative electrode tab 230 in advance. In particular, these effects may be prominent in bidirectional batteries.

A bidirectional battery may indicate a battery in which the positive electrode tab (not illustrated) connected to the positive electrode (for example, see the positive electrode 30 of FIG. 36) and the negative electrode tab 230 are directed in different directions from one side of the body portion of the electrode assembly (for example, see electrode assembly 1 of FIG. 36). Further, the bidirectional battery may indicate a battery in which a positive electrode lead (lead) protrudes from one side of a body portion of an electrode assembly (for example, see an electrode assembly 1 of FIG. 36) connected to one or more positive electrode tabs and a negative electrode lead protrudes from one side of a body portion of the electrode assembly connected to one or more negative electrode tabs 230 and facing in different directions.

The negative electrode sheet 10S according to the exemplary embodiment may be cut according to predetermined rules using a cutting machine (not illustrated). The predetermined rules are not limited, but may be, for example, for the standardization of the negative electrode 10 to be formed, and FIG. 11 may be referred to. The cutting machine may apply, for example, one or more of blade contact and laser non-contact cutting methods, but is not limited thereto. For example, referring to FIG. 11, the negative electrode sheet 10S may be cut in the transverse direction TD (for example, in the +Y axis), and through this, the individual negative electrode 10 may be formed.

A method for manufacturing the negative electrode 10 according to an exemplary embodiment may include a method for manufacturing the negative electrode sheet 10S described above. The method of manufacturing the negative electrode 10 may include cutting the negative electrode sheet 10S.

According to one exemplary embodiment, the negative electrode 10 may include the margin region 235, which is an area other than the negative electrode tab 230 in the second region 220. Referring to FIG. 11, at least a portion of the margin region 235 may be provided between the negative electrode tab 230 and the first metal layer 100. When viewed from the thickness direction (in other words, the +Z axis direction) of the first metal layer 100, at least a portion of the margin region 235 may be provided between the negative electrode tab 230 and the first metal layer 100. Further, referring to FIG. 11, at least a portion of the margin region 235 may be provided between the negative electrode tab 230 and the first region 210. When viewed from the thickness direction (in other words, the +Z axis direction) of the first metal layer 100, at least a portion of the margin region 235 may be provided between the negative electrode tab 230 and the first region 210. In other words, referring to FIG. 11, the first region 210 may be provided between the margin region 235 and the first metal layer 100. When viewed from the thickness direction (in other words, the +Z axis direction) of the first metal layer 100, the first region 210 may be provided between the margin region 235 and the first metal layer 100. Through this, the first metal layer 100, which is lithium metal, may be protected in the notching process, thereby improving process stability and improving the tensile strength of the negative electrode 10. Further, through the margin region 235, the lithium dendrite may be prevented from making direct contact with the positive electrode tab connected to the positive electrode (see 30 in FIG. 36), thereby causing a short. Specifically, it may effectively prevent the occurrence of short circuits even in unidirectional batteries where the positive electrode tab and the negative electrode tab 230 face the same direction.

A unidirectional battery may indicate a battery in which the positive electrode tab and the negative electrode tab 230 protrude from one side of the main body of the electrode assembly (see FIG. 36-1) and face in the same direction. In another exemplary embodiment, the unidirectional battery may indicate a battery that has a positive electrode lead protruding from one side of a body portion of an electrode assembly (see FIG. 36-1) and connected to one or more positive electrode tabs, and a negative electrode lead protruding from one side of a body portion of an electrode assembly (see FIG. 36-1) and connected to one or more negative electrode tabs 230, facing in the same direction.

Meanwhile, cutting the negative electrode sheet 10S so that two tabs 230 are included within one negative electrode 10 as shown in FIG. 11 is only exemplary. According to another exemplary embodiment, the negative electrode sheet 10S may also be formed with cutting points in units of three or more tabs (for example, ten) to facilitate the formation of the negative electrode structure 10A such as FIG. 36 described below.

For example, the negative electrode sheet 10S may be cut into predetermined units after forming an electrode assembly (for example, the electrode assembly 1 of FIG. 36) by interposing a positive electrode (for example, the positive electrode 30 of FIG. 36) between two surfaces formed by forming a bend. Or, for another example, the negative electrode sheet 10S may also be pre-cut at a stage prior to inserting the positive electrode.

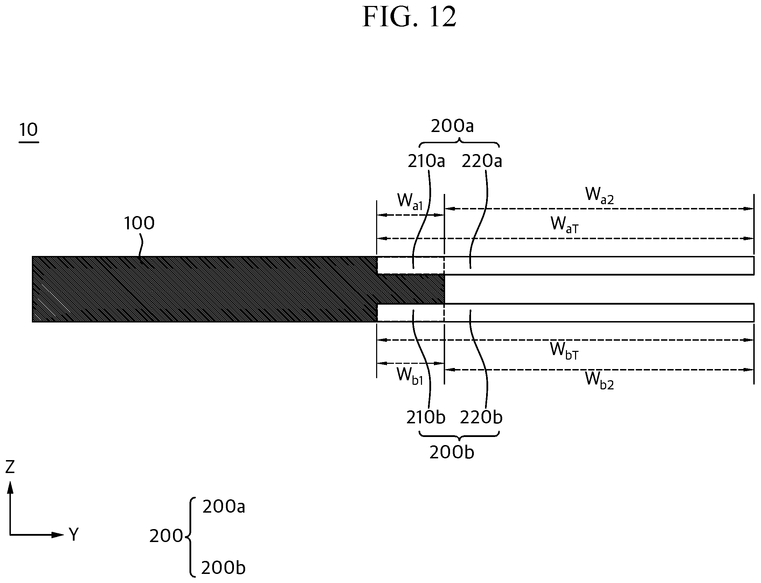

FIG. 12 is a plan view illustrating at least a portion of the negative electrode 10 according to an exemplary embodiment of the present application.

According to one exemplary embodiment, the negative electrode 10 may include a plurality of second metal layers (for example, a 2-1 metal layer 200a and a 2-2 metal layer 200b).

In the negative electrode 10 according to exemplary embodiment, the first metal layer 100 may be interposed between a plurality of second metal layers (for example, the 2-1 metal layer 200a and the 2-2 metal layer 200b).

For example, the negative electrode 10 according to an example may include the first metal layer 100 and the second metal layer 200 including the 2-1 metal layer 200a and the 2-2 metal layer 200b.

For example, each of the 2-1 metal layer 200a and the 2-2 metal layer 200b may be bonded and formed by overlapping with a portion of the first metal layer 100. Each of the 2-1 metal layer 200a and the 2-2 metal layer 200b may protrude in one direction from one edge of the first metal layer 100.

For example, in the negative electrode 10, each of the 2-1 metal layer 200a and the 2-2 metal layer 200b may be bonded and formed by overlapping with a portion of one edge of the first metal layer 100.

In the negative electrode 10 according to one exemplary embodiment, the first metal layer 100 may be interposed between the 2-1 metal layer 200a and the 2-2 metal layer 200b.

In the negative electrode 10 according to one exemplary embodiment, the 2-1 metal layer 200a and the 2-2 metal layer 200b may be bonded and formed by overlapping a portion of the first metal layer 100. For example, each of a plurality of second metal layers (for example, the 2-1 metal layer 200a and the 2-2 metal layer 200b) may protrude in one direction from one edge of the first metal layer 100.

According to various exemplary embodiments, for each of a plurality of second metal layers (for example, the 2-1 metal layer 200a and the 2-2 metal layer 200b), the contents of the second metal layer 200 described above may be referenced, unless contradictory.

In the negative electrode 10 according to an example, the tensile strength of the negative electrode 10 may be improved by interposing the first metal layer 100 between a plurality of second metal layers (for example, the 2-1 metal layer 200a and the 2-2 metal layer 200b).

For example, a plurality of second metal layers (for example, the 2-1 metal layer 200a and the 2-2 metal layer 200b) may be formed of other metals having lower reactivity than lithium (Li) metal.

For example, a plurality of second metal layers (for example, the 2-1 metal layer 200a, the 2-2 metal layer 200b) may be formed of at least one material selected from the group consisting of copper (Cu), nickel (Ni) and stainless steel.

In one exemplary embodiment, each of the second metal layers (for example, the 2-1 metal layer 200a, the 2-2 metal layer 200b) may independently have a variety of structures. Each of the second metal layers (for example, the 2-1 metal layer 200a, the 2-2 metal layer 200b) may include one or more of a predetermined pattern structure and a surface-treated region. One or more of the predetermined pattern structure and the surface-treated region may be included in the first region (a first region 210a, a first region 210b) of the second metal layer (for example, the 2-1 metal layer 200a, the 2-2 metal layer 200b).

For example, each of the second metal layers (for example, the 2-1 metal layer 200a, the 2-2 metal layer 200b) may independently include a predetermined pattern structure at least a portion (for example, at least a portion of a region in contact with the first metal layer 100). The pattern structure may be, for example, a mesh structure or a structure in which a grid pattern is formed on the surface, and may have all of these structures. For example, the mesh structure may indicate a structure in which a plurality of holes are formed, and the grid pattern may indicate a structure in which a plurality of grooves are formed. Through this, the contact area between the first metal layer 100 and the second metal layer (for example, the 2-1 metal layer 200a, the 2-2 metal layer 200b) may be maximized, thereby improving bonding strength.

Further, at least a portion (at least a portion of an area in contact with the first metal layer 100 in the second metal layer (for example, the 2-1 metal layer 200a, the 2-2 metal layer 200b)) of the second metal layer (for example, the 2-1 metal layer 200a, the 2-2 metal layer 200b) may be surface treated. The surface treatment may be performed by, for example, plasma treatment. When surface treated, it may have a different surface roughness than other areas. Through such appropriate surface treatment, the bonding strength between the first metal layer 100 and the second metal layer (for example, the 2-1 metal layer 200a, the 2-2 metal layer 200b) may be improved.

In an exemplary embodiment, each of the plurality of second metal layers (for example, the 2-1 metal layer 200a and the 2-2 metal layer 200b) may include a first region (the first region 210a, the first region 210b) (for example, an overlapping region) that overlaps the first metal layer 100 and a second region (a second region 220a, a second region 220b) (for example, a non-overlapping region) that is a region other than the first region (the first region 210a, the first region 210b). For example, based on the thickness direction of the first metal layer 100 (for example, the +Z axis direction of FIG. 12), each of the plurality of second metal layers (for example, the 2-1 metal layer 200a and the 2-2 metal layer 200b) may include a first region (the first region 210a, the first region 210b) (for example, an overlapping region) that overlaps the first metal layer 100 and a second region (the second region 220a, the second region 220b) (for example, a non-overlapping region) that is a region other than the first region (the first region 210a, the first region 210b).

In an exemplary embodiment, at least one of the plurality of second metal layers (for example, the 2-1 metal layer 200a and the 2-2 metal layer 200b) may be formed such that the width direction length (the width direction length $W_{a1}$, the width direction length $W_{b1}$) of the first region (the first region 210a, the first region 210b) (for example, an overlapping region) that overlaps the first metal layer 100 is shorter than the width direction length (the width direction length $W_{a2}$, the width direction length $W_{b2}$) of the second region (the second region 220a, the second region 220b) (for example, a non-overlapping region) other than the first region (the first region 210a, the first region 210b).

In the 2-1 metal layer 200a of the exemplary embodiment, the width direction length $W_{a1}$ of the first region 210a may be shorter than the width direction length $W_{a2}$ of the second region 220a. Further, in the 2-2 metal layer 200b, the width direction length $W_{b1}$ of the first region 210b may be shorter than the width direction length $W_{b2}$ of the second region 220b. By making the width direction length (the width direction length $W_{a1}$, the width direction length $W_{b1}$) of the first region (the first region 210a, the first region 210b) shorter than the width direction length (the width direction length $W_{a2}$, the width direction length $W_{b2}$) of the second region (the second region 220a, the second region 220b), the size of the negative electrode 10 may be minimized and the capacity may be maximized.

In the 2-1 metal layer 200a according to an exemplary embodiment, the ratio ($W_{a2}/W_{a1}$) of the width direction length $W_{a2}$ of the second region 220a to the width direction length $W_{a1}$ of the first region 210a may be greater than 1 and less than or equal to 20, 2 or greater and 18 or less, or may be 5 or greater and 16 or less. Further, in the 2-2 metal layer 200b, the ratio ($W_{b2}/W_{b1}$) of the width direction length $W_{b2}$ of the second region 220b to the width direction length $W_{b1}$ of the first region 210b may be greater than 1 and less than or equal to 20, 2 or greater and 18 or less, or may be 5 or greater and 16 or less. When the ratios ($W_{a2}/W_{a1}$, $W_{b2}/W_{b1}$) satisfy the above-mentioned range, the size of the negative electrode 10 may be minimized and the capacity may be maximized.

In the 2-1 metal layer 200a according to an exemplary embodiment, the ratio ($W_{a1}/W_{aT}$) of the width direction length $W_{a1}$ of the first region 210a to the width direction length $W_{aT}$ of the 2-1 metal layer 200a may be 0.01 to 0.1, 0.02 to 0.09, 0.03 to 0.08, or 0.04 to 0.07. Further, in the 2-2 metal layer 200b, the ratio ($W_{b1}/W_{bT}$) of the width direction length $W_{b1}$ of the first region 210b and the width direction length $W_{bT}$ of the 2-2 metal layer 200b may be 0.01 to 0.1, 0.02 to 0.09, 0.03 to 0.08, or 0.04 to 0.07. When the above ratios ($W_{a1}/W_{aT}$, $W_{b1}/W_{bT}$) satisfy the above-mentioned range, sufficient bonding strength may be secured between the first metal layer 100 and the 2-1 metal layer 200a and between the first metal layer 100 and the 2-2 metal layer 200b.

In the negative electrode 10 according to an exemplary embodiment, the first region (the first region 210a, the first region 210b) overlapping the first metal layer 100 of at least one of a plurality of second metal layers (for example, the 2-1 metal layer 200a and the 2-2 metal layer 200b) may be embedded in the first metal layer 100.

In the negative electrode 10 according to an exemplary embodiment, the first region 210a of the 2-1 metal layer 200a may be embedded in the first metal layer 100. For example, the upper surface of the 2-1 metal layer 200a and the upper surface of the first metal layer 100 may be located on the same plane. In other words, the 2-1 metal layer 200a may have the first region 210a embedded in the first metal layer 100, so that an upper step may not be included between the 2-1 metal layer 200a and the first metal layer 100.

In the negative electrode 10 according to an exemplary embodiment, the first region 210b of the 2-2 metal layer 200b may be embedded in the first metal layer 100. The lower surface of the 2-2 metal layer 200b and the lower surface of the first metal layer 100 may be positioned substantially on the same plane. For example, the 2-2 metal layer 200b may have the first region 210b embedded in the first metal layer 100, and may not include a lower step between the 2-2 metal layer 200b and the first metal layer 100.

There are cases where the first metal layer 100 and the 2-1 metal layer 200a or the 2-2 metal layer 200b are bonded and then rewound through the form of the 2-1 metal layer 200a and the 2-2 metal layer 200b described above, and here, the problem of meandering movement, which is a misalignment between metal layers, as well as the problem of electrode twisting due to meandering movement may be prevented. Further, when rewinding is performed as described above through this form and unwinding is performed to manufacture the negative electrode structure (see 10A of FIG. 36) described later, the problem of the meandering movement at this point may be prevented. Further, when there is a step through this form (especially, if it is thicker than the thickness of the positive electrode (see 30 of FIG. 36) described later), the problem of excessive protrusion of the stack part 10A_S of the negative electrode structure (see 10A of FIG. 36) and a decrease in the energy density per volume of the battery cell may be prevented.

In the negative electrode 10 according to an exemplary embodiment, the first region (the first region 210a, the first region 210b) (for example, an overlapping region) of each of the plurality of second metal layers (for example, the 2-1 metal layer 200a and the 2-2 metal layer 200b) overlapping the first metal layer 100 may have substantially the same width direction length (the width direction length $W_{a1}$, the width direction length $W_{b1}$).

In the negative electrode 10 according to another exemplary embodiment, the width direction length $W_{a1}$ of the first region 210a of the 2-1 metal layer 200a and the width direction length $W_{b1}$ of the first region 210b of the 2-2 metal layer 200b may be substantially the same. Substantially being the same may indicate that the width direction length $W_{a1}$ of the first region 210a of the 2-1 metal layer 200a and the width direction length $W_{b1}$ of the first region 210b of the 2-2 metal layer 200b are the same, or may indicate that R according to Equation 1 below is 10% or less, even if different. The form may be advantageous in manufacturing a negative electrode structure (see 10A of FIG. 36) including a folded part and a stack part, which will be described later.

Equation 1

$$R = |W_{a1}\text{-}W_{b1}|/W_{a1}\times100$$

In Equation 1, $W_{a1}$ indicates the width direction length of the first region 210a of the above 2-1 metal layer 200a, and $W_{b1}$ indicates the width direction length of the first region 210b of the above 2-2 metal layer 200b.

Referring to FIG. 12, in the negative electrode 10 according to an exemplary embodiment, the width direction length $W_{a2}$ of the second region 220a of the 2-1 metal layer 200a and the width direction length $W_{b2}$ of the second region 220b of the 2-2 metal layer 200b may be substantially the same. Substantially being the same may indicate that the width direction length $W_{a2}$ of the second region 220a of the 2-1 metal layer 200a and the width direction length $W_{b2}$ of the second region 220b of the 2-2 metal layer 200b are the same, or may indicate that R' according to Equation 2 below is 10% or less, even if different.

Equation 2

$$R' = |W_{a2}\text{-}W_{b2}|/W_{a2}\times100$$

In Equation 2, $W_{a2}$ is the width direction length of the second region 220a of the above 2-1 metal layer 200a, and $W_{b2}$ is the width direction length of the second region 220b of the above 2-2 metal layer 200b.

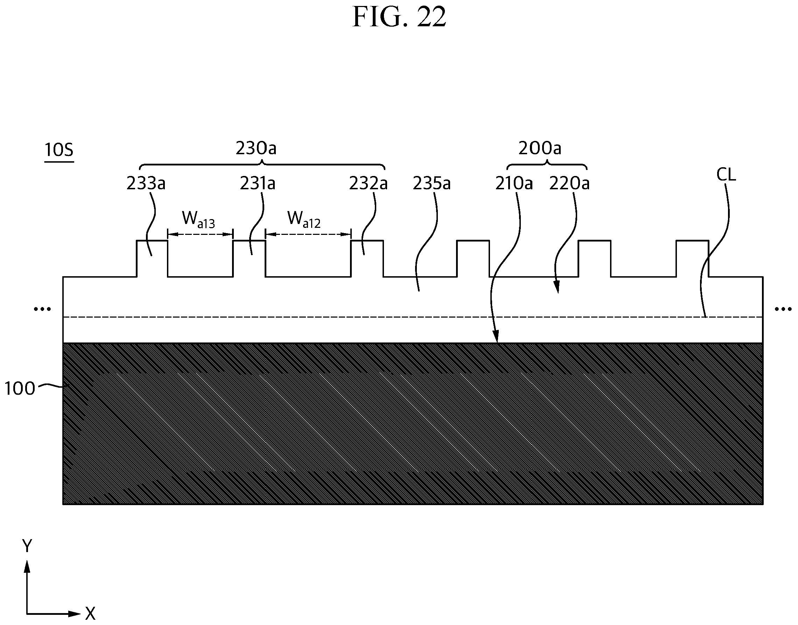

In the negative electrode 10 according to another exemplary embodiment, unlike FIG. 12, the width direction length $W_{a2}$ of the second region 220a of the 2-1 metal layer 200a and the width direction length $W_{b2}$ of the second region 220b of the 2-2 metal layer 200b may be different. For example, the width direction length $W_{a2}$ of the second region 220a of the 2-1 metal layer 200a may be greater than the width direction length $W_{b2}$ of the second region 220b of the 2-2 metal layer 200b. Here, a negative electrode tab (see 230a in FIG. 22) described later may be formed on the 2-1 metal layer 200a having a larger width direction length, and the negative electrode tab described later may not be formed in the 2-2 metal layer 200b having a smaller width direction length. In an exemplary embodiment, the width direction length $W_{b2}$ of the second region 220b of the 2-2 metal layer 200b may be shorter than the width direction length $W_{b1}$ of the first region 210b of the 2-2 metal layer 200b. For example, in this case, the 2-2 metal layer 200b may only have the first region 210b.

In an exemplary embodiment, the thickness of the first metal layer 100 may be greater than the thickness of one or more of the second metal layers (for example, the 2-1 metal layer 200a and the 2-2 metal layer 200b). For example, the thickness of the first metal layer 100 may be greater than the sum of the thicknesses of the 2-1 metal layer 200a and the 2-2 metal layer 200b. Through this, the tensile strength of the negative electrode 10 may be improved.

In the negative electrode 10 according to an exemplary embodiment, a negative electrode tab (a first negative electrode tab (230a of FIG. 22), and a second negative electrode tab) may be formed in at least a portion of one or more second regions (the second region 220a, the second region 220b) (for example, non-overlapping regions) among a plurality of second metal layers (for example, the 2-1 metal layer 200a and the 2-2 metal layer 200b). For example, each negative electrode tab (a first negative electrode tab (230a of FIG. 22), and a second negative electrode tab may be formed by performing a notching process on one or more second regions (the second region 220a, the second region 220b) (for example, non-overlapping regions) among the second metal layers (for example, the 2-1 metal layer 200a and the 2-2 metal layer 200b). In other words, the negative electrode 10 may include a negative electrode tab (a first negative electrode tab (230a of FIG. 22), second negative electrode tab) formed in one or more second regions (the second region 220a, the second region 220b) (for example, non-overlapping regions) among the second metal layers (for example, the 2-1 metal layer 200a and the 2-2 metal layer 200b).

In the negative electrode 10 according to an exemplary embodiment, each negative electrode tab (a first negative electrode tab (230a of FIG. 22), a second negative electrode tab) may be formed independently in multiple numbers. Here, the notching process is not particularly limited, but the notching process may be performed by a contact method such as, for example, a puncher, or a non-contact method using a laser. The negative electrode 10 may include a plurality of negative electrode tabs (a first negative electrode tab (230a of FIG. 22), a second negative electrode tab) formed in each of one or more second regions (the second region 220a, the second region 220b) (for example, non-overlapping regions) among second metal layers (for example, the 2-1 metal layer 200a and the 2-2 metal layer 200b).

In various exemplary embodiments, the second metal layer (for example, the 2-1 metal layer 200a and the 2-2 metal layer 200b) is formed of a metal having relatively lower reactivity than lithium metal, and thus even if the notching process is performed in a non-contact manner, the occurrence of safety problems due to fumes may be minimized.

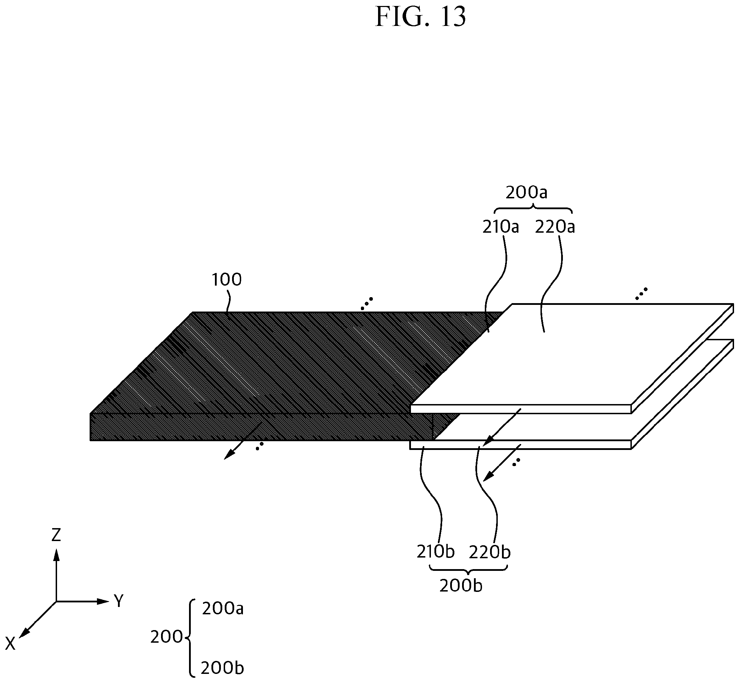

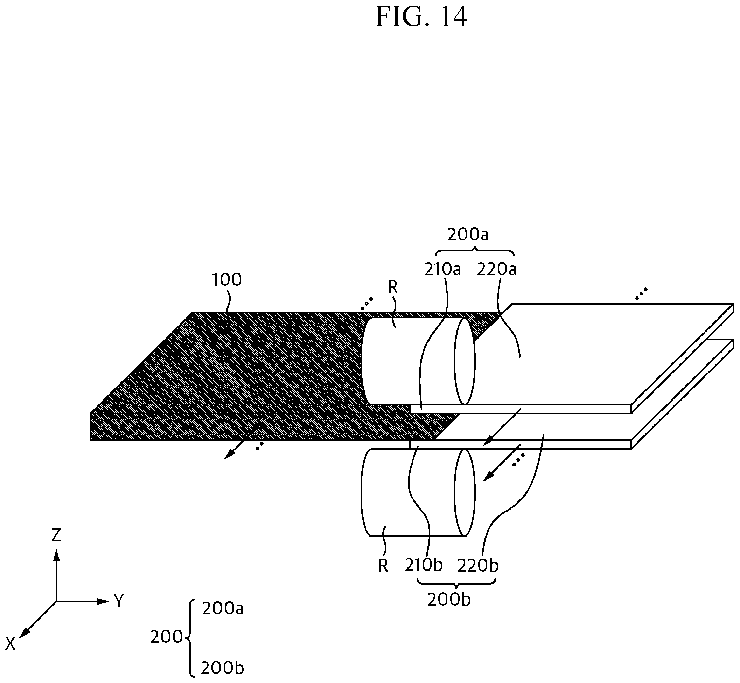

FIG. 13 and FIG. 14 illustrate a part of the manufacturing process of the negative electrode sheet (see 10S of FIG. 22) according to a fourth exemplary embodiment of the present application, and unless contradictory, the descriptions with respect to FIG. 2 and FIG. 3 may be referred to. Referring to FIG. 13, the 2-1 metal layer 200a and the 2-2 metal layer 200b may be positioned on the upper or lower side, respectively, with the first metal layer 100 interposed therebetween so as to overlap a portion of one edge of the first metal layer 100. The 2-1 metal layer 200a and the 2-2 metal layer 200b may be transported in the same direction via transport rolls (not illustrated). Further, the transport direction of the first metal layer 100 and the transport directions of the 2-1 metal layer 200a and the 2-2 metal layer 200b may be the same.

In an exemplary embodiment, referring to FIG. 14, the first metal layer 100 and the 2-1 metal layer 200a may be rolled with the roller R, and the first metal layer 100 and the 2-2 metal layer 200b may be rolled with the roller R. Specifically, the overlapping areas of the first metal layer 100 and the 2-1 metal layer 200a, and of the first metal layer 100 and the 2-2 metal layer 200b may be mutually bonded by pressure applied by the roller R.

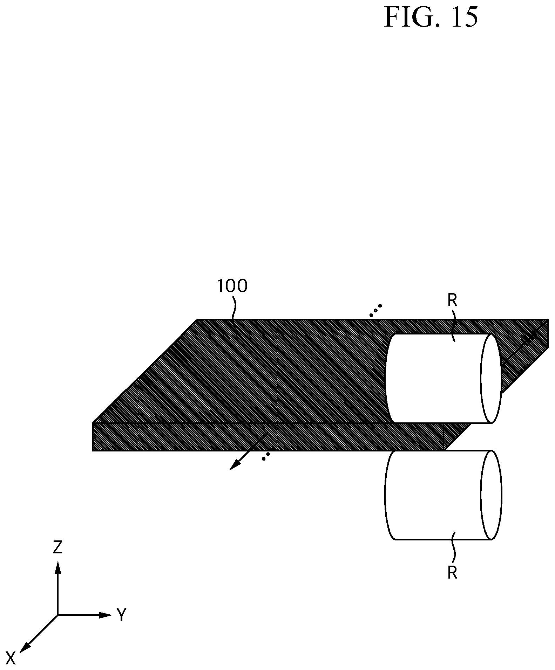

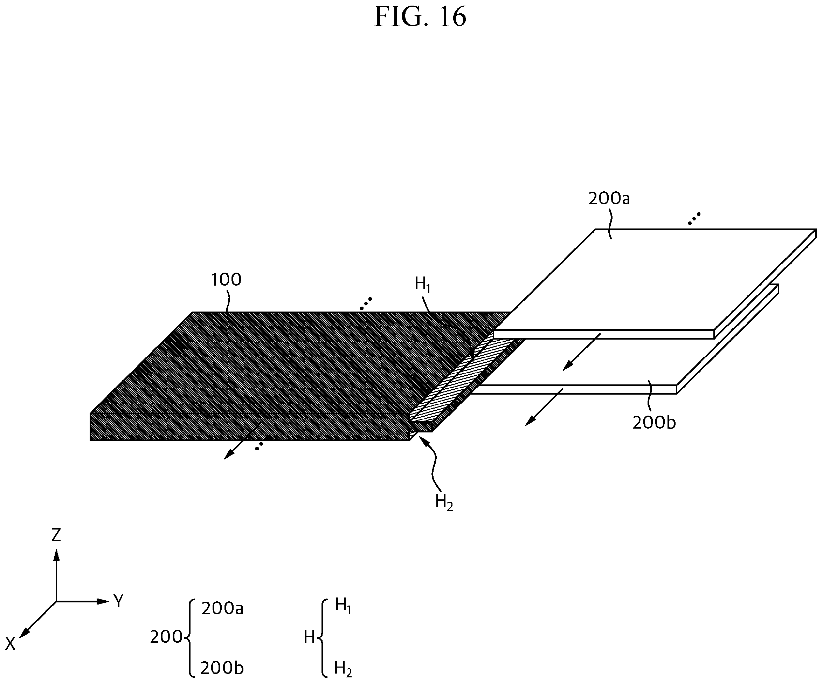

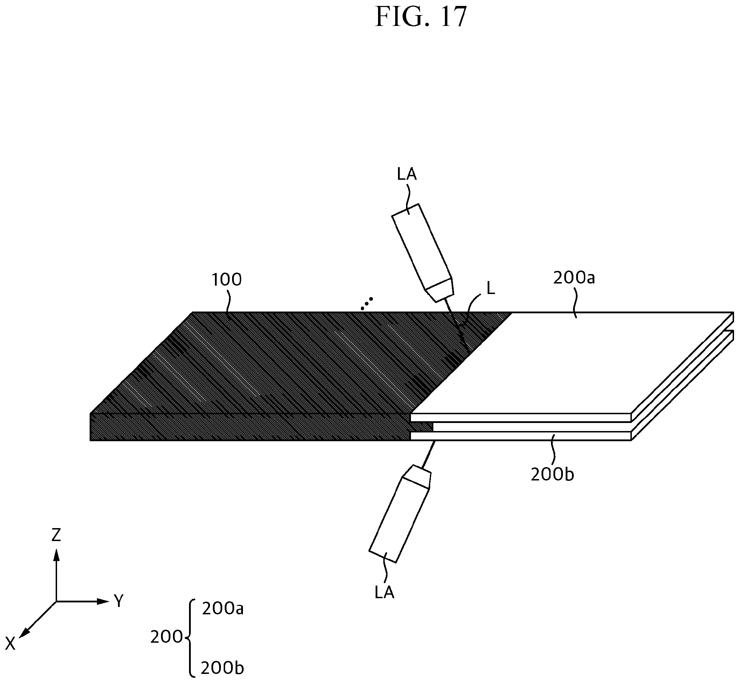

FIG. 15 to FIG. 17 illustrate a part of the manufacturing process of the negative electrode sheet (see 10S of FIG. 22) according to a fifth exemplary embodiment of the present application. The roller R may roll a portion of one edge of the first metal layer 100, which is transported in the +X axis direction. The roller R is equipped in multiple numbers to roll both the upper surface and the lower surface of the first metal layer 100. Referring to FIG. 16, the first metal layer 100 may have a first groove $H_1$ formed on the upper surface side and a second groove $H_2$ formed on the lower surface side by the roller R. The 2-1 metal layer 200a may be introduced into the first groove $H_1$, and the 2-2 metal layer 200b may be introduced into the second groove $H_2$. Referring to FIG. 17, each of the 2-1 metal layer 200a introduced into the first groove $H_1$ and the 2-2 metal layer 200b introduced into the second groove $H_2$ may be bonded to the first metal layer 100 through a bonding means such as the laser apparatus LA.

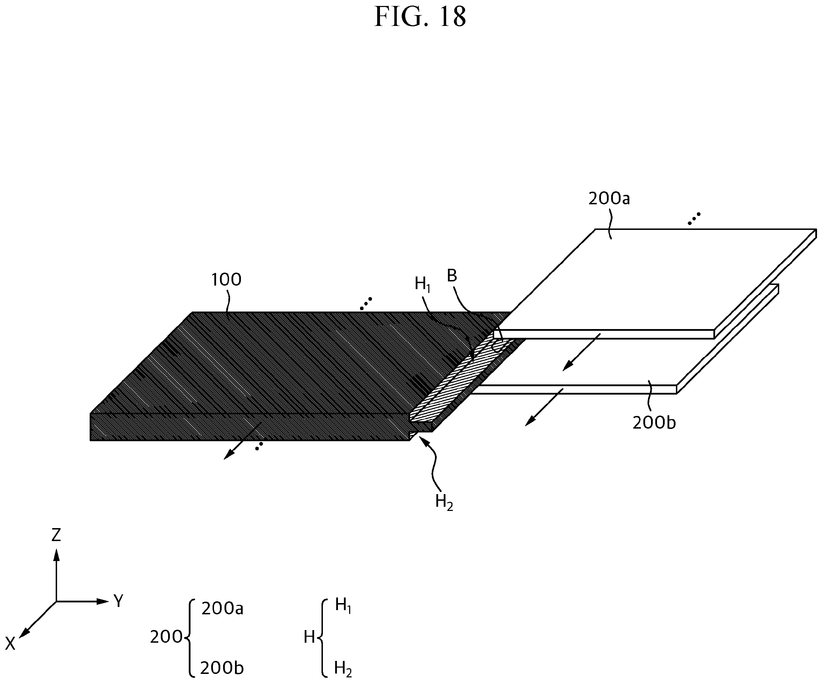

FIG. 18 illustrates a part of the manufacturing process of the negative electrode sheet (see 10S of FIG. 22) according to a sixth exemplary embodiment of the present application. Referring to FIG. 18, as illustrated in FIG. 15 and FIG. 16, after the roller R rolls a portion of one edge area of the first metal layer 100, the binder B may be applied onto the first groove $H_1$ and the second groove $H_2$ formed by rolling, and the 2-1 metal layer 200a and the 2-2 metal layer 200b may be introduced onto the binder B respectively and bonded to the first metal layer 100.

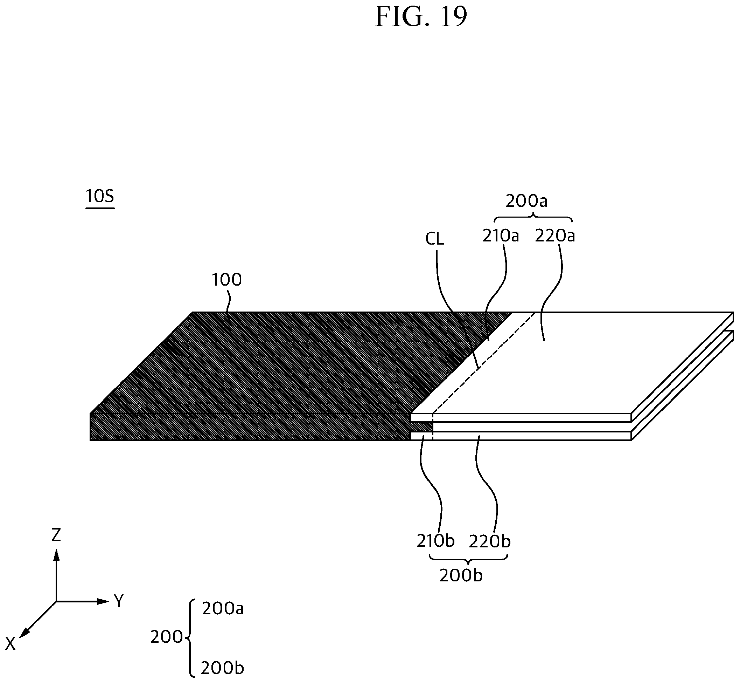

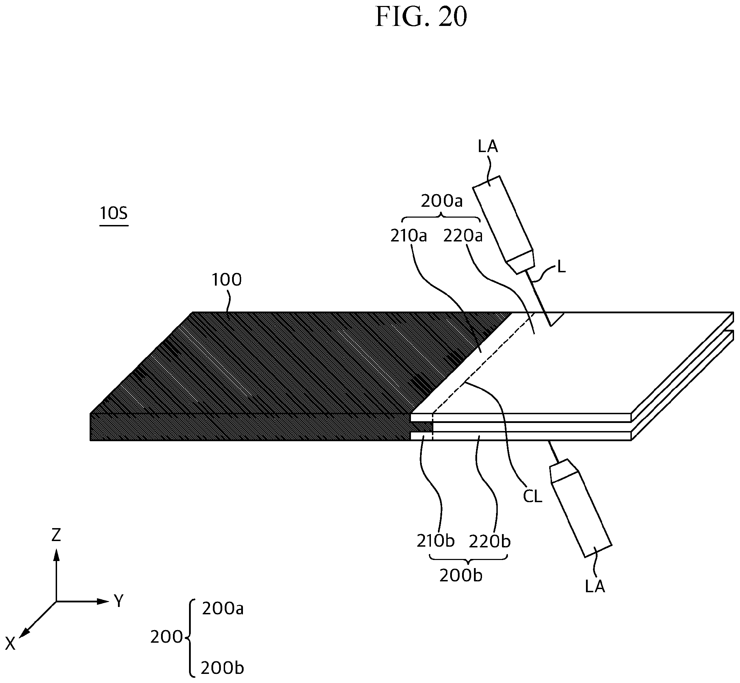

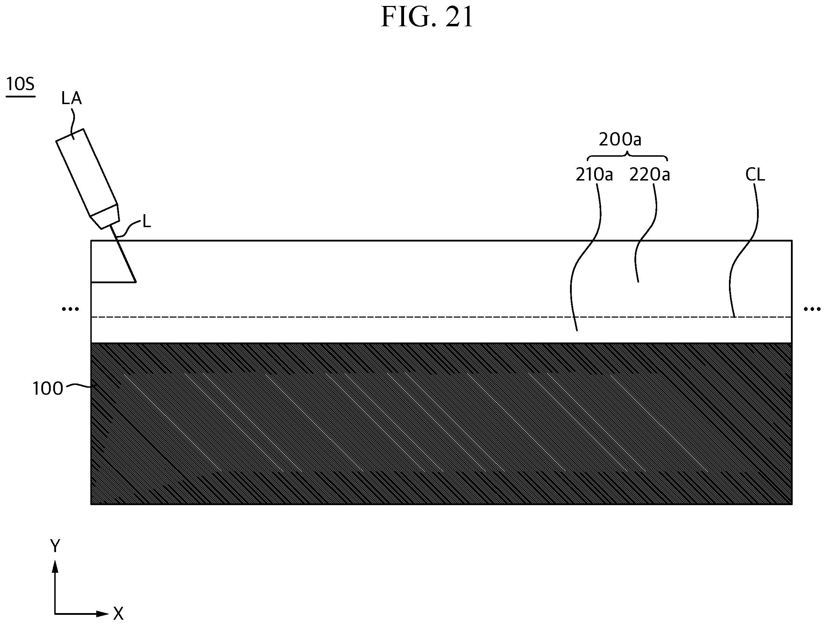

FIG. 19 and FIG. 20 illustrate a part of the manufacturing process of the negative electrode sheet 10S according to an exemplary embodiment of the present application. FIG. 21 is a plan view of FIG. 20, illustrating a part of manufacturing process of the negative electrode sheet 10S according to an exemplary embodiment of the present application.

Referring to FIG. 19, in the above-described manner, the first metal layer 100 and the 2-1 metal layer 200a may be bonded to each other to form the bonding boundary line CL. The bonding boundary line CL may indicate the end line of the first metal layer 100 among the areas where the first metal layer 100 and the 2-1 metal layer 200a overlap. The 2-2 metal layer 200b, like the 2-1 metal layer 200a, may be bonded to the first metal layer 100 and form the bonding boundary line CL. For example, the bonding boundary line CL may indicate the end line of the first metal layer 100 in the region where the first metal layer 100 and the 2-1 metal layer 200a overlap, based on the thickness direction of the first metal layer 100 (for example, the +Z axis direction of FIG. 19), and this also be the case for the 2-2 metal layer 200b.

Referring to FIG. 20 and FIG. 21, according to an exemplary embodiment, a notching process may be performed on the negative electrode sheet 10S using the laser apparatus LA.

For example, the laser L generated from the laser apparatus LA may be irradiated to the second region 220a of the 2-1 metal layer 200a, and accordingly, the second region 220a may be partially cut to form the first negative electrode tab (see 230a in FIG. 22). The 2-2 metal layer 200b may also be the same as the 2-1 metal layer 200a.

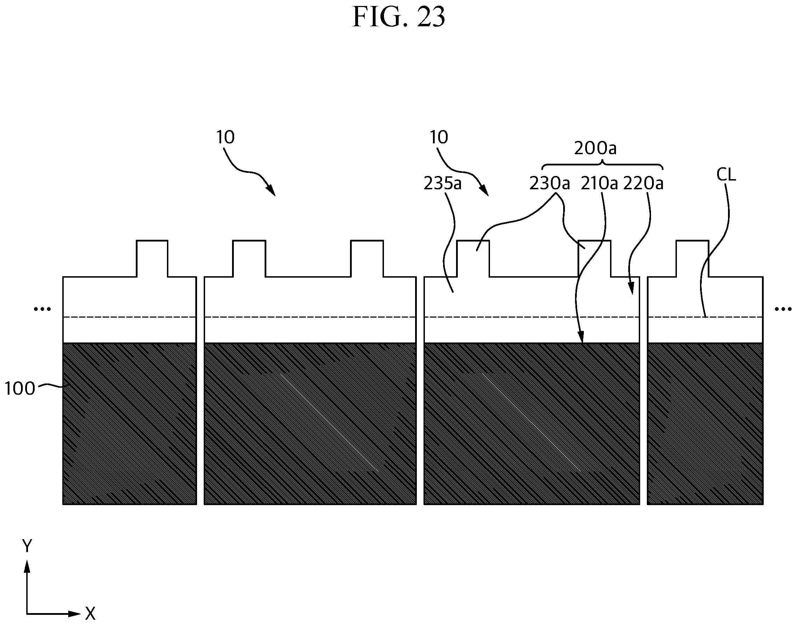

FIG. 22 is a plan view illustrating at least a portion of the negative electrode sheet 10S according to an exemplary embodiment of the present application. FIG. 23 is a plan view illustrating the negative electrode 10 formed by cutting the negative electrode sheet (see 10S of FIG. 22) in an example embodiment of the present application.

On the negative electrode sheet 10S according to an exemplary embodiment, the first negative electrode tab 230a including a first tab 231a, a second tab 232a and a third tab 233a may be formed in the second region 220a of the 2-1 metal layer 200a. In other words, the negative electrode sheet 10S may include the first negative electrode tab 230a formed on the second region 220a of the 2-1 metal layer 200a.

For example, each of the second tab 232a and the third tab 233a that are mutually adjacent to each other on both sides based on the first tab 231a in the 2-1 metal layer 200a may be positioned a predetermined distance apart from the first tab 231a. For example, 1a length $W_{a12}$, which is the gap between the first tab 231a and the second tab 232a, may be formed longer than 2a length $W_{a13}$, which is the gap between the first tab 231a and the third tab 233a.

Although not illustrated separately in FIG. 22, the 2-2 metal layer 200b, like the 2-1 metal layer 200a, may have a second negative electrode tab formed in the second region 220b of the 2-2 metal layer 200b, the second negative electrode tab including a first tab, a second tab and a third tab. In other words, the negative electrode sheet 10S according to the exemplary embodiment may include a second negative electrode tab formed in the second region (220b of FIG. 20) of the 2-2 metal layer 200b.

For example, each of the second tab and third tab that are mutually adjacent to each other on both sides based on the first tab in the 2-2 metal layer 200b may be positioned a certain distance apart from the first tab. For example, 1b length, which is the gap between the first tab and the second tab, may be formed longer than the 2b length, which is the gap between the first tab and the third tab. Making the distance between tabs different like this may make it easier to align the tabs.

The negative electrode sheet 10S according to an exemplary embodiment may include a negative electrode tab (the first negative electrode tab 230a, a second negative electrode tab) formed on a second region (the second region 220a, the second region 220b of FIG. 20) of at least one of a plurality of second metal layers (the 2-1 metal layer 200a, the 2-2 metal layer 200b).

Although not particularly limited, the first negative electrode tab of the 2-1 metal layer 200a and the second negative electrode tab of the 2-2 metal layer 200b may be bonded at least partially to each other at corresponding locations. For example, the first tab 231a of the 2-1 metal layer 200a may be bonded to the first tab of the 2-2 metal layer 200b at some regions. Through this, the tab structure is simplified and the manufacturing convenience may be improved.

The negative electrode sheet 10S according to an exemplary embodiment may include a margin region (a first margin region 235a, a second margin region) provided adjacent to the first metal layer 100 in the second region (the second region 220a, the second region 220b of FIG. 20) of at least one of a plurality of second metal layers (the 2-1 metal layer 200a, the 2-2 metal layer 200b).

Specifically, the negative electrode sheet 10S according to an exemplary embodiment may further include the first margin region 235a, which is a region other than the region corresponding to the first negative electrode tab 230a in the second region 220a of the 2-1 metal layer 200a. Referring to FIG. 22, at least a portion of the first margin region 235a may be provided between the first negative electrode tab 230a and the first metal layer 100. When viewed from the thickness direction (in other words, the +Z axis direction) of the first metal layer 100, at least a portion of the first margin region 235a may be provided between the first negative electrode tab 230a and the first metal layer 100. Further, referring to FIG. 22, at least a portion of the first margin region 235a may be provided between the first negative electrode tab 230a and the first region 210 of the 2-1 metal layer 200a.

For example, when viewed from the thickness direction (in other words, the +Z axis direction) of the first metal layer 100, at least a portion of the first margin region 235a may be provided between the first negative electrode tab 230a and the first region 210a of the 2-1 metal layer 200a. In other words, referring to FIG. 22, the first region 210a of the 2-1 metal layer 200a may be provided between the first margin region 235a and the first metal layer 100. When viewed from the thickness direction (in other words, the +Z axis direction) of the first metal layer 100, the first region 210a of the 2-1 metal layer 200a may be provided between the first margin region 235a and the first metal layer 100. When the manufacturing process of the negative electrode sheet 10S is performed in a roll-to-roll manner through this, since the elongation of the first metal layer 100, which is lithium metal, is suppressed along the machine direction MD, a favorable effect may be obtained in the continuous notching process.

The description regarding the above 2-1 metal layer 200a may also be applied to the 2-2 metal layer 200b. Specifically, in the description of the 2-1 metal layer 200a, the 2-1 metal layer 200a may be the 2-2 metal layer 200b, the first negative electrode tab 230a may be the second negative electrode tab, and the first margin region 235a may be the second margin region. With respect to the negative electrode sheet 10S according to an exemplary embodiment, each of the second region 220a of the 2-1 metal layer 200a and the second region (220b of FIG. 20) of the 2-2 metal layer may include a margin region (for example, 235a) provided adjacent to the first metal layer 100. Here, the margin region (for example, 235a) may be a region other than a region where a negative electrode tab (for example, the first negative electrode tab 230a, second negative electrode tab) is formed by a notching process in each of the second region 220a of the 2-1 metal layer 200a and the second region (220b of FIG. 20) of the 2-2 metal layer 200b. Further, as described above, a plurality of negative electrode sheets 10S may be laminated along one direction (for example, the thickness direction of the first metal layer 100 (in other words, the +Z axis direction)) or in a curved state (folded) and the notching process may be performed at once to form negative electrode tabs (for example, the first negative electrode tab 230a, second negative electrode tab). Through this, the process may be simplified, and minimized is tab alignment mismatch phenomenon that occurs when forming a negative electrode tab in advance (for example, the first negative electrode tab 230a, second negative electrode tab).

The negative electrode sheet 10S according to an exemplary embodiment may be cut according to predetermined rules using a cutting machine (not illustrated). The predetermined rules are not limited, but could be, for example, for the standardization of the negative electrode 10 to be formed, and FIG. 23 may be referenced. The cutting machine may apply one or more of, for example, blade contact and laser non-contact cutting methods, but is not limited thereto. Referring to FIG. 23, the negative electrode sheet 10S may be cut along the transverse direction TD (for example, the +Y axis direction), and the individual negative electrode 10 may be formed through this.

According to one exemplary embodiment, the negative electrode 10 may include a negative electrode tab (the first negative electrode tab 230a, second negative electrode tab) formed in the second region (the second region 220a, the second region 220b of FIG. 20) of at least one among the plurality of second metal layers (the 2-1 metal layer 200a, the 2-2 metal layer 200b). Further, according to one exemplary embodiment, the negative electrode 10 may include a margin region (the first margin region 235a, a second margin region) provided adjacent to the first metal layer 100 in the second region (the second region 220a, the second region 220b of FIG. 20) of at least one of the plurality of second metal layers (the 2-1 metal layer 200a, the 2-2 metal layer 200b).

According to an exemplary embodiment, the negative electrode 10 may include a margin region (the first margin region 235a, a second margin region) other than the negative electrode tab (the first negative electrode tab 230a, the second negative electrode tab) in the second region (the second region 220a, the second region 220b of FIG. 20) of at least one of the plurality of second metal layers (the 2-1 metal layer 200a, the 2-2 metal layer 200b).

Specifically, according to one exemplary embodiment, the negative electrode 10 may include the first margin region 235a, which is an area other than the first negative electrode tab 230a, in the second region 220a of the 2-1 metal layer 200a. Referring to FIG. 23, at least a portion of the first margin region 235a may be provided between the first negative electrode tab 230a and the first metal layer 100. When viewed from the thickness direction (in other words, the +Z axis direction) of the first metal layer 100, at least a portion of the first margin region 235a may be provided between the first negative electrode tab 230a and the first metal layer 100. Further, referring to FIG. 23, at least a portion of the first margin region 235a may be provided between the first negative electrode tab 230a and the first region 210 of the 2-1 metal layer 200a. When viewed from the thickness direction (in other words, the +Z axis direction) of the first metal layer 100, at least a portion of the first margin region 235a may be provided between the first negative electrode tab 230a and the first region 210a of the 2-1 metal layer 200a. In other words, referring to FIG. 23, the first region 210a of the 2-1 metal layer 200a may be provided between the first margin region 235a and the first metal layer 100. When viewed from the thickness direction (in other words, the +Z axis direction) of the first metal layer 100, the first region 210a of the 2-1 metal layer 200a may be provided between the first margin region 235a and the first metal layer 100. Through this, the first metal layer 100, which is lithium metal, may be protected in the notching process, thereby improving process stability and improving the tensile strength of the negative electrode 10.

The description regarding the above 2-1 metal layer 200a may also be applied to the 2-2 metal layer 200b. Specifically, in the description of the 2-1 metal layer 200a, the 2-1 metal layer 200a may be the 2-2 metal layer 200b, the first negative electrode tab 230a may be the second negative electrode tab, and the first margin region 235a may be the second margin region.

Further, through the margin region (the first margin region 235a, second margin region), lithium dendrite may be prevented from making direct contact with the positive electrode tab connected to the positive electrode (see 30 of FIG. 36), thereby preventing an electrical short. Specifically, even in a unidirectional battery where the positive electrode tab and negative electrode tab (the first negative electrode tab 230a, second negative electrode tab) face the same direction, the occurrence of an electrical short may be effectively prevented.

Meanwhile, cutting the negative electrode sheet 10S so that two tabs 230 are included within one negative electrode 10 as illustrated in FIG. 23 is only exemplary. According to another exemplary embodiment, the negative electrode sheet 10S may also be formed with cutting points in units of three or more tabs (for example, ten) to facilitate the formation of the negative electrode structure 10A such as FIG. 36 described below.

For example, the negative electrode sheet 10S may be cut into predetermined units after interposing a positive electrode (for example, the positive electrode 30 of FIG. 36) between two surfaces formed by bending. For another example, the negative electrode sheet 10S may also be pre-cut at a stage prior to inserting the positive electrode.

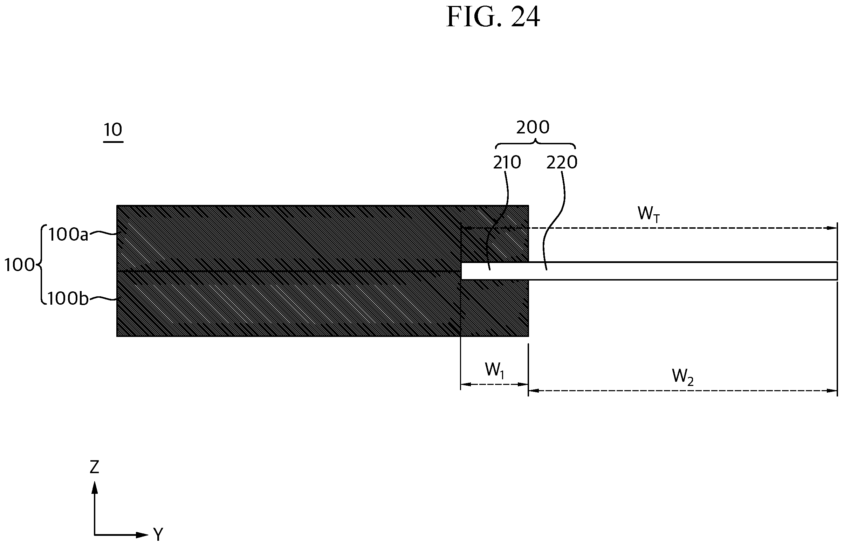

FIG. 24 is a plan view illustrating at least a portion of the negative electrode 10 according to an exemplary embodiment of the present application.

The negative electrode 10 according to one exemplary embodiment may include a plurality of first metal layers (for example, a 1-1 metal layer 100a and a 1-2 metal layer 100b). Further, in the negative electrode 10, the second metal layer 200 may be interposed between a plurality of first metal layers (for example, the 1-1 metal layer 100a and the 1-2 metal layer 100b).

For example, the negative electrode 10 according to an example may include the second metal layer 200 and, the first metal layer 100 including the 1-1 metal layer 100a and the 1-2 metal layer 100b. For example, the second metal layer 200 overlaps with a portion of each of the 1-1 metal layer 100a and the 1-2 metal layer 100b and may be bonded to the 1-1 metal layer 100a and the 1-2 metal layer 100b. The second metal layer 200 may protrude in one direction from one edge of each of the 1-1 metal layer 100a and the 1-2 metal layer 200b. Further, for example, in the negative electrode 10, the second metal layer 200 overlaps a portion of one edge of each of the 1-1 metal layer 100a and the 1-2 metal layer 100b, and be bonded to the 1-1 metal layer 100a and the 1-2 metal layer 100b.

In the negative electrode 10 according to an exemplary embodiment, the second metal layer 200 may be interposed between the 1-1 metal layer 100a and the 1-2 metal layer 100b.

In the negative electrode 10 according to an exemplary embodiment, the second metal layer 200 may be bonded and formed by overlapping with some areas of the 1-1 metal layer 100a and the 1-2 metal layer 100b. For example, the second metal layer 200 may protrude in one direction from one edge of each of a plurality of first metal layers (for example, the 1-1 metal layer 100a and the 1-2 metal layer 100b).

According to various exemplary embodiments, for each of the plurality of first metal layers (for example, the 1-1 metal layer 100a and the 1-2 metal layer 100b), the contents of the first metal layer 100 mentioned above may be referred to unless contradictory.

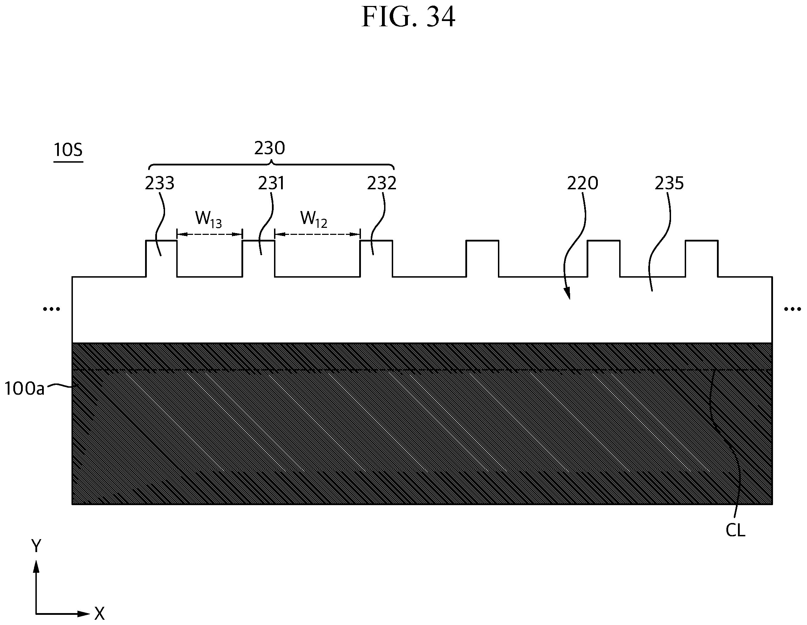

In the negative electrode 10 according to an exemplary embodiment, various benefits may be obtained by the second metal layer 200 being interposed among the plurality of first metal layers (for example, the 1-1 metal layer 100a and the 1-2 metal layer 100b). For example, when the positive electrode faces both sides of the negative electrode 10, the positive electrode may fully utilize the area of the first metal layer (for example, the 1-1 metal layer 100a and the 1-2 metal layer 100b), and the overall length of the battery cell may be reduced, and thus energy density per weight and energy density per volume may be improved. Further, an easy process or design may be achieved by minimizing the bias of the negative electrode tab (see 230 of FIG. 34) to one side. Further, the tensile strength of the negative electrode 10 may be improved.

For example, a plurality of first metal layers (for example, the 1-1 metal layer 100a and the 1-2 metal layer 100b) may be formed of lithium metal (Li metal).

According to various exemplary embodiments, the second metal layer 200 may be formed of a material other than lithium metal. For example, the second metal layer 200 may be formed of another metal having lower reactivity than lithium (Li) metal. Further, the second metal layer 200 may be formed of at least one material among copper (Cu), nickel (Ni) and stainless steel.

In an exemplary embodiment, the second metal layer 200 may have various structures. Each of the second metal layers 200 may include one or more of a predetermined pattern structure and a surface-treated region. One or more of the predetermined pattern structure and the surface-treated region may be included in at least part of the first region 210.

For example, at least a portion of the second metal layer 200 (for example, at least a portion of the area in contact with the first metal layer (the 1-1 metal layer 100a or the 1-2 metal layer 100b)) may include a predetermined pattern structure. The pattern structure may be, for example, a mesh structure or a structure in which a grid pattern is formed on the surface, and may have all of the structures. For example, a mesh structure may indicate a structure in which a plurality of holes are formed, and a grid pattern may indicate a structure in which a plurality of grooves are formed. Through this, the contact area between the first metal layer (the 1-1 metal layer 100a or the 1-2 metal layer 100b) and the second metal layer 200 may be maximized, and bonding strength may be improved.

Further, at least a portion of the second metal layer 200 (for example, at least a portion of the area of the second metal layer 200 that contacts the first metal layer (the 1-1 metal layer 100a or the 1-2 metal layer 100b)) may be surface treated. The surface treatment may be performed by, for example, plasma treatment. When surface treated, it may have a different surface roughness than other areas. Through such appropriate surface treatment, the bonding strength between the first metal layer 100 and the second metal layer 200 may be improved.

In an exemplary embodiment, the thickness of the first metal layer (the 1-1 metal layer 100a or the 1-2 metal layer 100b) may be greater than the thickness of the second metal layer 200. Further, for example, the thickness of each of the 1-1 metal layer 100a and the 1-2 metal layer 100b may be greater than the thickness of the second metal layer 200. Through this, the tensile strength of the negative electrode 10 may be improved.

In the negative electrode 10 according to an exemplary embodiment, the second metal layer 200 may include the first region 210 (for example, an overlapping region) that overlaps a plurality of first metal layers (for example, the 1-1 metal layer 100a or the 1-2 metal layer 100b) and the second region 220 (for example, a non-overlapping region) that is a region other than the first region 210. For example, based on the thickness direction (for example, the +Z axis direction of FIG. 24) of the first metal layer (the 1-1 metal layer 100a or the 1-2 metal layer 100b), the second metal layer 200 may include the first region 210 (for example, an overlapping region) that overlaps a plurality of first metal layers (for example, the 1-1 metal layer 100a or the 1-2 metal layer 100b) and the second region 220 (for example, a non-overlapping region) that is a region other than the first region 210.

According to an exemplary embodiment, if there are multiple first metal layers 100, the second metal layer 200 may determine the first region 210 and the second region 220 based on each first metal layer 100. For example, the first region 210 (for example, an overlapping region) where the second metal layer 200 overlaps the 1-1 metal layer 100a and the first region 210 (for example, an overlapping region) where the second metal layer 200 overlaps the 1-2 metal layer 100b may be the same. However, the drawing depicts that the first region 210 (for example, an overlapping region) where the second metal layer 200 overlaps the 1-1 metal layer 100a and the first region 210 (for example, an overlapping region) where the second metal layer 200 overlaps the 1-2 metal layer 100b are identical, but are not limited thereto, and may be different.

Meanwhile, when the negative electrode 10 according to an exemplary embodiment includes a plurality of first metal layers 100, the relationship between the second metal layer 200 and the first region 210 (for example, an overlapping region) and the second region 220 (for example, a non-overlapping region) of each first metal layer 100 may independently satisfy the aforementioned content.

In an exemplary embodiment, with respect to the second metal layer 200 and at least one of a plurality of first metal layers (for example, the 1-1 metal layer 100a and the 1-2 metal layer 100b), the width direction length $W_1$ of the first region (for example, the overlapping region) that overlaps with each other may be formed to be shorter than the width direction length $W_2$ of the second region (for example, the non-overlapping region), which is a region other than the first region (for example, the overlapping region).

For example, with respect to the second metal layer 200 and the 1-1 metal layer 100a and the second metal layer 200 and the 1-2 metal layer 100b, the width direction length $W_1$ of the first region 210 may be shorter than the width direction length $W_2$ of the second region 220, and the ratio ($W_2/W_1$) of the width direction length $W_2$ of the second region 220 to the width direction length $W_1$ of the first region 210 may also satisfy the aforementioned range. Further, each of the second metal layer 200 and the 1-1 metal layer 100a and the second metal layer 200 and the 1-2 metal layer 100b may independently satisfy the above-mentioned conditions of the width direction length $W_1$ of the first region 210 or the above-mentioned ratio ($W_2/W_1$).

In the negative electrode 10 according to an exemplary embodiment, the first region 210 (for example, an overlapping region) of the second metal layer 200 may be embedded in at least one of a plurality of first metal layers (the 1-1 metal layer 100a, the 1-2 metal layer 100b).

In the negative electrode 10 according to an exemplary embodiment, the first region 210 of the second metal layer 200 may be embedded in the 1-1 metal layer 100a and the 1-2 metal layer 100b. For example, the first region 210 of the second metal layer 200 may be buried while being covered by the 1-1 metal layer 100a and the 1-2 metal layer 100b.

Meanwhile, in the negative electrode 10 according to an exemplary embodiment, the plurality of first metal layers (the 1-1 metal layer 100a, the 1-2 metal layer 100b) may be at least partially bonded in the area other than the area where the first region 210 of the second metal layer 200 (for example, the overlapping area) is embedded. In an exemplary embodiment, the plurality of first metal layers (the 1-1 metal layer 100a, the 1-2 metal layer 100b) may be at least partially bonded at a location corresponding to the second region 220 of the second metal layer 200 (for example, non-overlapping region).

In the negative electrode 10 according to an exemplary embodiment, the 1-1 metal layer 100a and the 1-2 metal layer 100b may be at least partially bonded in the area other than the area where the first region 210 of the second metal layer 200 is buried. In an exemplary embodiment, the 1-1 metal layer 100a and the 1-2 metal layer 100b may be at least partially bonded at a location corresponding to the second region 220 of the second metal layer 200 (for example, a non-overlapping region). In other words, the 1-1 metal layer 100a and the 1-2 metal layer 100b may be in contact with each other and be in a bonded state in the region that does not correspond to the first region 210 of the second metal layer 200 (in other words, the second region 220 (for example, a non-overlapping region).

In the negative electrode 10 according to an exemplary embodiment, the negative electrode tab (see 230 of FIG. 34) may be formed in at least a portion of the second region 220 (for example, a non-overlapping region) of the second metal layer 200. For example, the negative electrode tab (see 230 of FIG. 34) may be formed by performing a notching process on the second region 220 of the second metal layer 200. In other words, the negative electrode 10 may include the negative electrode tab (see 230 of FIG. 34) formed in the second region 220 of the second metal layer 200.

In the negative electrode 10 according to an exemplary embodiment, a plurality of negative electrode tabs (see 230 in FIG. 34) may be formed. Here, the notching process is not particularly limited, but may be performed by a contact method such as, for example, a puncher, or a non-contact method utilizing a laser. The negative electrode 10 may include a plurality of negative electrode tabs (230 of FIG. 34) formed in the second region 220 of the second metal layer 200.

In various exemplary embodiments, the second metal layer 200 is formed of a metal having relatively lower reactivity than lithium metal, and thus even if the notching process is performed in a non-contact manner, the occurrence of safety problems due to fumes may be minimized.

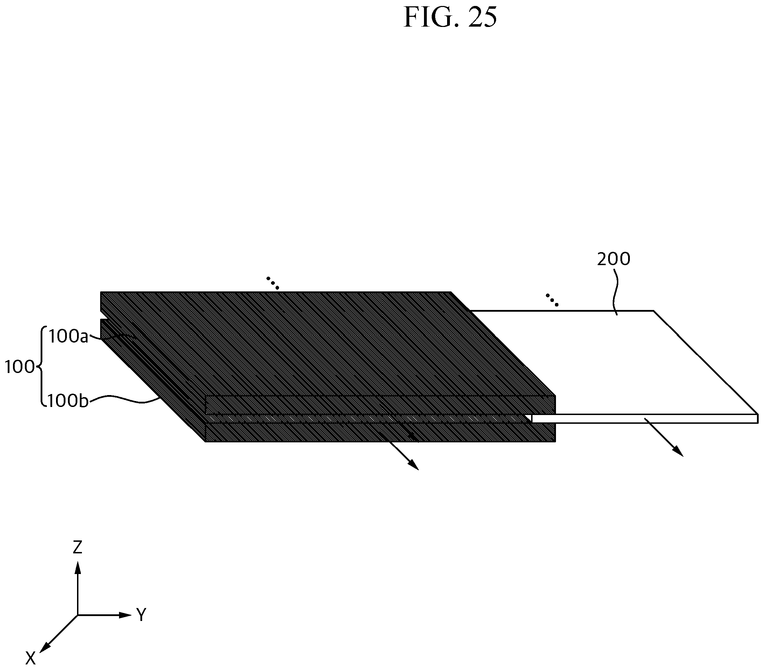

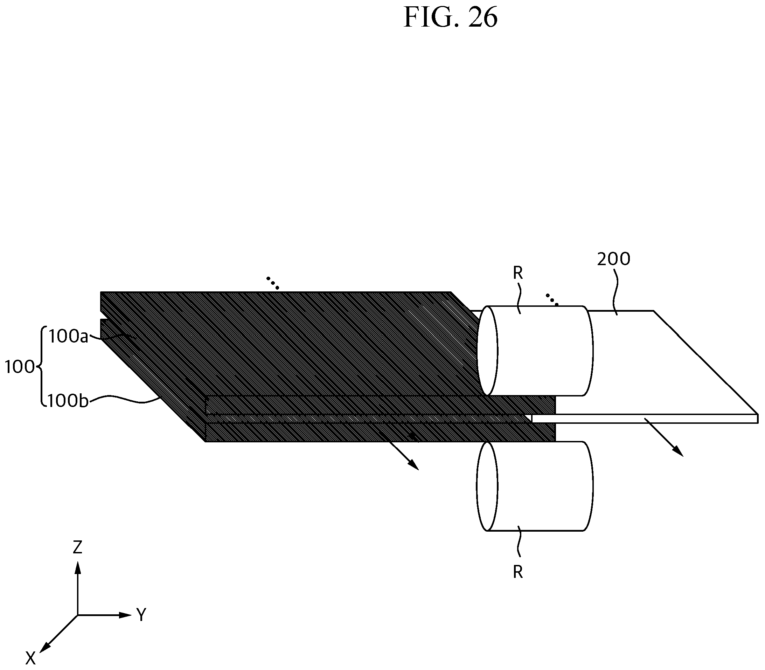

FIG. 25 and FIG. 26 illustrate a part of the manufacturing process of the negative electrode sheet (see 10S of FIG. 34) according to a seventh exemplary embodiment of the present application, and for this, reference may be made to the descriptions in FIG. 13 and FIG. 14, unless contradictory. Referring to FIG. 25, the second metal layer 200 may overlap a portion of side edge of each of the 1-1 metal layer 100a and the 1-2 metal layer 100b. Further, with the second metal layer 200 placed between the 1-1 metal layer 100a and the 1-2 metal layer 100b, the 1-1 metal layer 100a and the 1-2 metal layer 100b may be respectively positioned on the upper or lower side of the second metal layer 200. The 1-1 metal layer 100a and the 1-2 metal layer 100b may be transported in the same direction via transport rolls (not illustrated).

For example, the transport direction of the second metal layer 200 and the transport directions of the 1-1 metal layer 100a and the 1-2 metal layer 100b may be the same. Meanwhile, as will be described later, when the second metal layer 200 is introduced to the 1-1 metal layer 100a and the 1-2 metal layer 100b, the 1-1 metal layer 100a and the 1-2 metal layer 100b may come into contact with each other and become bonded.

In an exemplary embodiment, referring to FIG. 26, each of the 1-1 metal layer 100a and the second metal layer 200 and the 1-2 metal layer 100b and the second metal layer 200 may be rolled with the roller R. Specifically, by applying pressure to the overlapping area of the 1-1 metal layer 100a and the second metal layer 200 and the overlapping area of the 1-2 metal layer 100b and the second metal layer 200 with the roller R, these may be bonded to each other.

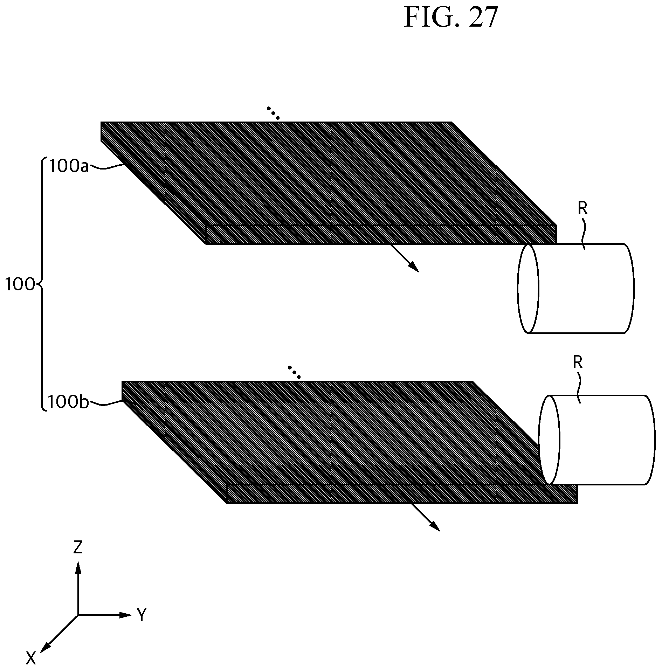

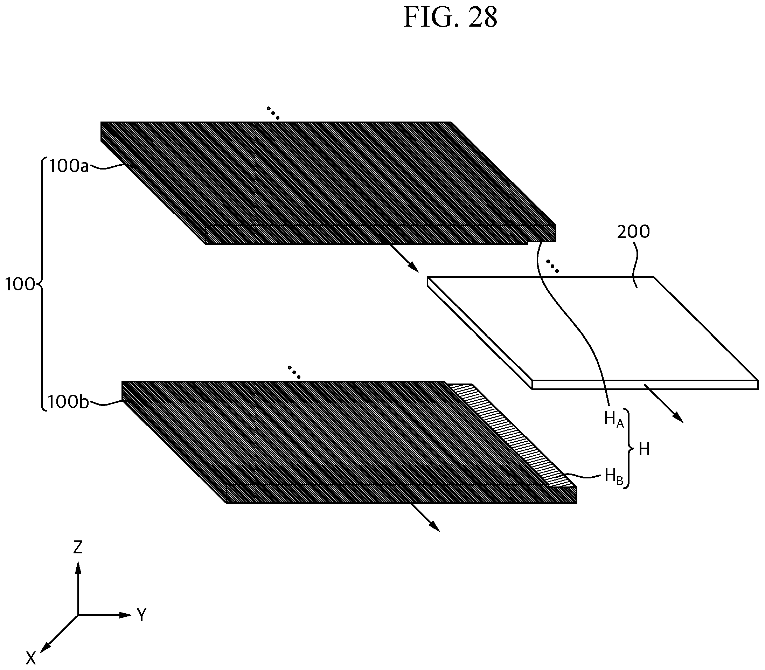

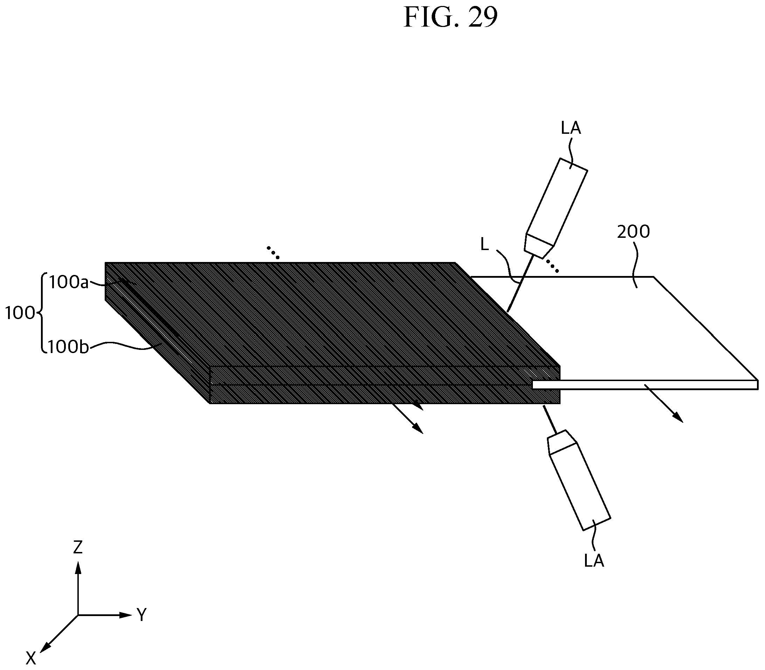

FIG. 27 to FIG. 29 illustrate a part of the manufacturing process of the negative electrode sheet (see 10S of FIG. 34) according to an eighth exemplary embodiment of the present application. The roll R may roll a portion of one edge of each of the 1-1 metal layer 100a and the 1-2 metal layer 100b, which are transported in the +X direction. A prepared plurality of rollers R may roll the lower surface of the 1-1 metal layer 100a and the upper surface of the 1-2 metal layer 100b, respectively. Referring to FIG. 28, a groove A $H_A$ may be formed on the lower surface side of the 1-1 metal layer 100a by the roller R, and a groove B $H_B$ may be formed on the upper surface side of the 1-2 metal layer 100b by the roller R. The second metal layer 200 may be introduced into each of the groove A $H_A$ and the groove B $H_B$. Referring to FIG. 29, the second metal layer 200 introduced into the groove A $H_A$ and the groove B $H_B$ may be bonded to the 1-1 metal layer 100a and the 1-2 metal layer 100b through the bonding means such as the laser apparatus LA.

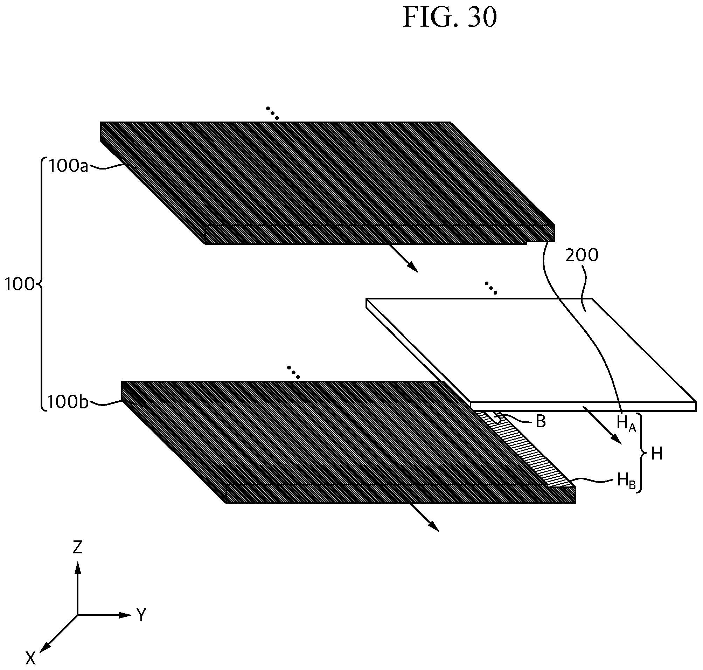

FIG. 30 illustrates a part of the manufacturing process of the negative electrode sheet (see 10S of FIG. 34) according to a ninth exemplary embodiment of the present application. Referring to FIG. 30, as illustrated in FIG. 27 and FIG. 28, after the roller R rolls a portion of one edge of each of the 1-1 metal layer 100a and the 1-2 metal layer 100b, the binder B may be applied onto the groove A $H_A$ and the groove B $H_B$ formed by rolling, and the second metal layer 200 is introduced onto the binder B, respectively, so that it may be bonded to the 1-1 metal layer 100a and the 1-2 metal layer 100b.

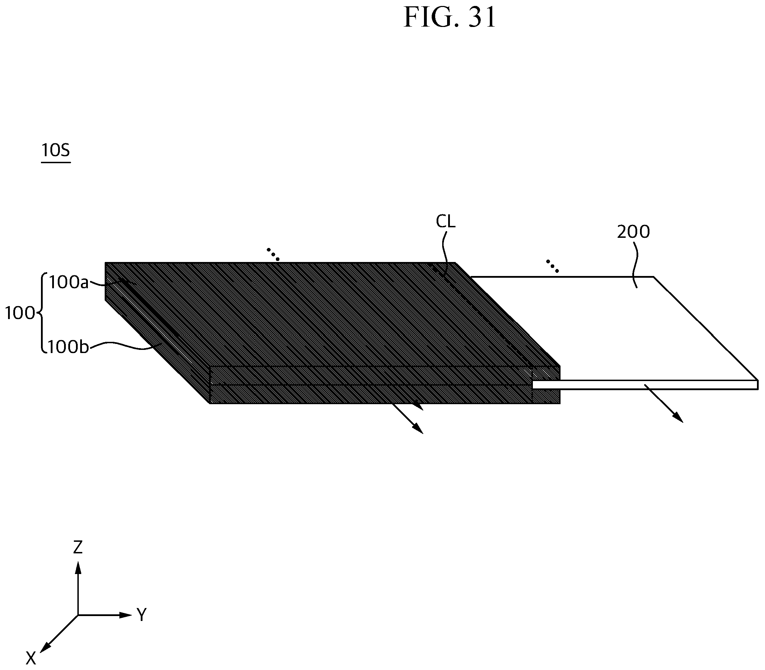

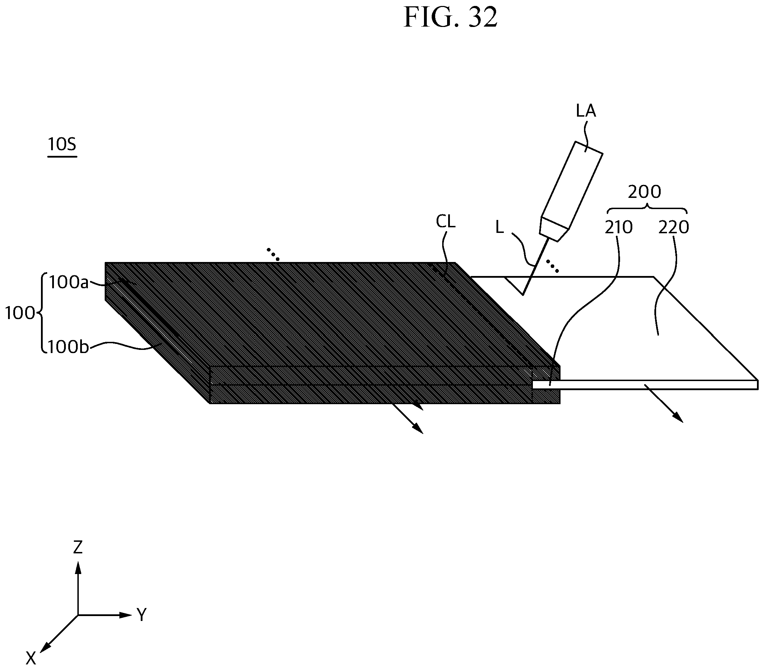

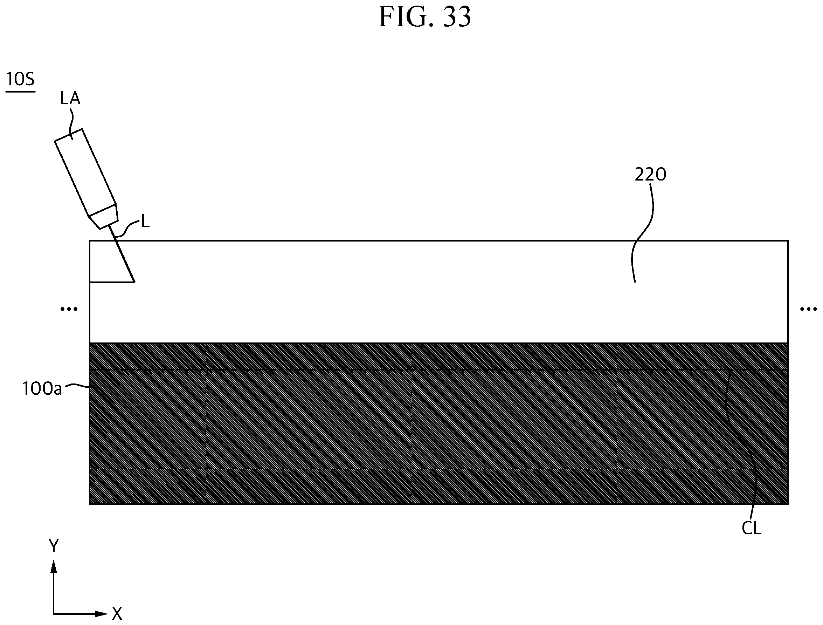

FIG. 31 and FIG. 32 illustrate a part of the manufacturing process of the negative electrode sheet 10S according to an exemplary embodiment of the present application. FIG. 33 is a plan view of FIG. 32, and illustrates a part of the manufacturing process of the negative electrode sheet 10S according to an exemplary embodiment of the present application.

Referring to FIG. 31, in the above-described manner, the 1-1 metal layer 100a and the second metal layer 200 may be bonded to each other to form the bonding boundary line CL. The bonding boundary line CL may indicate the end line of the second metal layer 200 among the areas where the 1-1 metal layer 100a and the second metal layer 200 overlap. For example, the bonding boundary line CL may indicate the end line of the 1-1 metal layer 100a in the region where the 1-1 metal layer 100a and the second metal layer 200 overlap, based on the thickness direction (for example, the +Z axis direction of FIG. 31) of one of the first metal layers (the 1-1 metal layer 100a or the 1-2 metal layer 100b). The 1-2 metal layer 100b may also be the same as the 1-1 metal layer 100a.

Referring to FIG. 32 and FIG. 33, according to an exemplary embodiment, a notching process may be performed on the negative electrode sheet 10S using the laser apparatus LA.

For example, the laser L generated from the laser apparatus LA may be irradiated to the second region 220 of the second metal layer 200, and accordingly, the second region 220 may be partially cut to form the negative electrode tab (see 230 in FIG. 34).

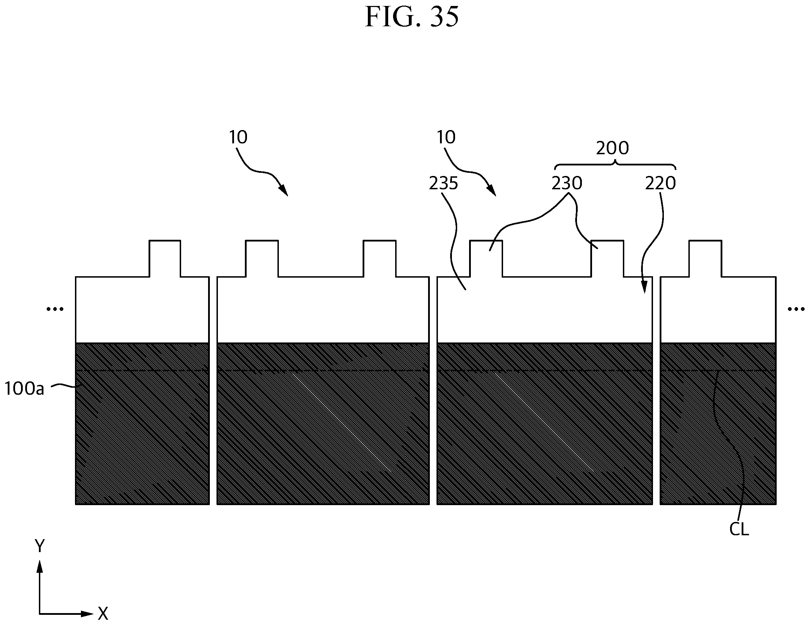

FIG. 34 is a plan view illustrating at least a portion of the negative electrode sheet 10S according to an exemplary embodiment of the present application. FIG. 35 is a plan view exemplarily illustrating a negative electrode formed by cutting the negative electrode sheet (see 10S of FIG. 34) in an exemplary embodiment of the present application.

In the negative electrode sheet 10S according to an exemplary embodiment, the negative electrode tab 230 may be formed in the second region 220 of the second metal layer 200. Specifically, the negative electrode tab 230 including the first tab 231, the second tab 232 and the third tab 233 may be formed in the second region 220 of the second metal layer 200. In other words, the negative electrode sheet 10S according to an exemplary embodiment may include the negative electrode tab 230 formed in the second region 220.

Each of the second tab 232 and the third tab 233, which are mutually adjacent to each other and on both sides of the first tab 231 in the second metal layer 200, may be positioned a predetermined distance apart from the first tab 231. For example, the first length $W_{12}$, which is the gap between the first tab 231 and the second tab 232, may be formed longer than the second length $W_{13}$, which is the gap between the first tab 231 and the third tab 233. Making the distance between tabs different like this may help align the tabs.

According to one exemplary embodiment, the negative electrode sheet 10S may further include the margin region 235, which is a region other than the region corresponding to the negative electrode tab 230 in the second region 220. Referring to FIG. 34, at least a portion of the margin region 235 may be provided between the negative electrode tab 230 and the first metal layer (the 1-1 metal layer 100a or the 1-2 metal layer 100b). When viewed in the thickness direction (in other words, the +Z axis direction) of one of the first metal layers (the 1-1 metal layer 100a or the 1-2 metal layer 100b), at least a portion of the margin region 235 may be provided between the negative electrode tab 230 and the first metal layer (the 1-1 metal layer 100a or the 1-2 metal layer 100b). Further, referring to FIG. 32 and FIG. 34, at least a portion of the margin region 235 may be provided between the negative electrode tab 230 and the first region 210.

For example, when viewed in the thickness direction (in other words, the +Z axis direction) of one of the first metal layers (the 1-1 metal layer 100a or the 1-2 metal layer 100b), at least a portion of the margin region 235 may be provided between the negative electrode tab 230 and the first region 210. In other words, referring to FIG. 34, the first region 210 may be provided between the margin region 235 and one of the first metal layers (the 1-1 metal layer 100a or the 1-2 metal layer 100b). When viewed in the thickness direction (in other words, the +Z axis direction) of one of the first metal layers (the 1-1 metal layer 100a or the 1-2 metal layer 100b), the first region 210 may be provided between the margin region 235 and one of the first metal layers (the 1-1 metal layer 100a or the 1-2 metal layer 100b). Through this, when the manufacturing process of the negative electrode sheet 10S is performed in a roll-to-roll manner, the elongation of the first metal layer (the 1-1 metal layer 100a or the 1-2 metal layer 100b), which is the lithium metal, along the machine direction MD is suppressed, and thus beneficial effects may be obtained in the continuous notching process.

FIG. 34 illustrates only the 1-1 metal layer 100a, but it may be apparent to a person skilled in the art that the 1-2 metal layer 100b may also be the same as the 1-1 metal layer 100a.

The negative electrode sheet 10S according to one exemplary embodiment may include the margin region 235 provided adjacent to at least one of the first metal layers (the 1-1 metal layer 100a or the 1-2 metal layer 100b) in the second region 220. Here, the margin region 235 may be a region other than the region where the negative electrode tab 230 is formed by the notching process in the second region 220. In a state where a plurality of negative electrode sheets 10S are stacked (folded) along one direction (for example, the thickness directions (in other words, the +Z axis direction) of one of the first metal layers (the 1-1 metal layer 100a or the 1-2 metal layer 100b)) or bent (folded), the negative electrode tab 230 may be formed by performing the notching process at once, and through this, the process may be simplified and the tab alignment mismatch phenomenon that occurs when the negative electrode tab 230 is formed in advance may be minimized.

The negative electrode sheet 10S according to an exemplary embodiment may be cut according to predetermined rules using a cutting machine (not illustrated). The predetermined rules are not limited thereto, but, for example, predetermined rules may be for the standardization of the negative electrode 10 to be formed. FIG. 35 may be referenced. For example, the cutting machine may employ one or more of blade contact and laser non-contact cutting methods, but is not limited thereto. Referring to FIG. 35, the negative electrode sheet 10S may be cut along the transverse direction TD (for example, the +Y axis direction), and through this, the individual negative electrode 10 may be formed.

According to one exemplary embodiment, the negative electrode 10 may include the negative electrode tab 230 formed in the second region 220. Further, the negative electrode 10 according to an exemplary embodiment may include the margin region 235 adjacent to at least one of a plurality of first metal layers (the 1-1 metal layer 100a or the 1-2 metal layer 100b) in the second region 220.

According to one exemplary embodiment, the negative electrode 10 may include the margin region 235, which is an area other than the negative electrode tab 230 in the second region 220. Referring to FIG. 35, at least a portion of the margin region 235 may be provided between the negative electrode tab 230 and one of the first metal layers (the 1-1 metal layer 100a or the 1-2 metal layer 100b). When viewed in the thickness direction (in other words, the +Z axis direction) of one of the first metal layers (the 1-1 metal layer 100a or the 1-2 metal layer 100b), at least a portion of the margin region 235 may be provided between the negative electrode tab 230 and one of the first metal layers (the 1-1 metal layer 100a or the 1-2 metal layer 100b). Further, referring to FIG. 35, at least a portion of the margin region 235 may be provided between the negative electrode tab 230 and the first region 210. When viewed in the thickness direction (in other words, the +Z axis direction) of one of the first metal layers (the 1-1 metal layer 100a or the 1-2 metal layer 100b), at least a portion of the margin region 235 may be provided between the negative electrode tab 230 and the first region 210. In other words, referring to FIG. 35, the first region 210 may be provided between the margin region 235 and one of the first metal layers (the 1-1 metal layer 100a or the 1-2 metal layer 100b). When viewed in the thickness direction (in other words, the +Z axis direction) of one of the first metal layers (the 1-1 metal layer 100a or the 1-2 metal layer 100b), the first region 210 may be provided between the margin region 235 and one of the first metal layers (the 1-1 metal layer 100a or the 1-2 metal layer 100b). Through this, the process stability may be improved by protecting the first metal layer (the 1-1 metal layer 100a or the 1-2 metal layer 100b), which is lithium metal in the notching process, and the tensile strength of the negative electrode 10 may be improved.

Further, through the margin region 235, lithium dendrite may be prevented from making direct contact with the positive electrode tab connected to the positive electrode (see 30 of FIG. 36), thereby causing an electrical short. Specifically, the short circuit occurrence may be effectively prevented even in a unidirectional battery where the positive electrode tab and the negative electrode tab 230 face the same direction.

FIG. 35 illustrates only the 1-1 metal layer 100a, but it may be apparent to a person skilled in the art that the 1-2 metal layer 100b may also be the same as the 1-1 metal layer 100a.

Meanwhile, cutting the negative electrode sheet 10S so that the two tabs 230 are included within one negative electrode 10 as illustrated in FIG. 35 is only exemplary, and according to another exemplary embodiment, the negative electrode sheet 10S may also be formed with cutting points in units of three or more tabs (for example, ten) to facilitate the formation of the negative electrode structure 10A such as FIG. 36 described below.

For example, the negative electrode sheet 10S may be cut into predetermined units after forming an electrode assembly (for example, the electrode assembly 1 of FIG. 36) by interposing a positive electrode (for example, the positive electrode 30 of FIG. 36) between two surfaces formed by forming a curve. Alternatively, for another example, the negative electrode sheet 10S may also be pre-cut at a stage prior to inserting the positive electrode.

FIG. 36 is a plan view illustrating at least a portion of the electrode assembly 1 according to an exemplary embodiment of the present application.

In various exemplary embodiments, the electrode assembly 1 may include the positive electrode 30 and the negative electrode structure 10A including the negative electrode sheet 10S and separators 21 and 22.

In an exemplary embodiment, the negative electrode structure 10A may have a structure in which the negative electrode sheet 10S is sandwiched between the two separators 21 and 22.

In an exemplary embodiment, the negative electrode structure 10A may have a structure in which the negative electrode 10 cut from the negative electrode sheet 10S is interposed between the two separators 21 and 22 instead of the negative electrode sheet 10S.

According to one exemplary embodiment, the positive electrode 30 may include a positive electrode collector supporting a positive electrode active material layer and the positive electrode active material layer. For example, the positive electrode 30 may include a structure in which a positive electrode active material layer is formed on at least one side or both sides of the positive electrode collector. The positive electrode active material layer contains a positive electrode active material, and may further include a positive electrode binder, a conductive agent, and additives as needed.

The positive electrode collector according to the exemplary embodiment is not particularly limited as long as it supports the positive electrode active material layer and is conductive without causing physical and chemical changes to the composition included in the electrode assembly 1 and the battery cell, etc. For example, as the positive electrode collector, aluminum, stainless steel, nickel, titanium, copper, palladium, calcined carbon, carbon, nickel or silver-treated copper or stainless steel or an aluminum-cadmium alloy may be used. Further, the positive electrode collector may have fine irregularities formed on its surface, and the form may be various, such as film, sheet, foil, mesh, net and foam.

According to one exemplary embodiment, the positive electrode active material may include a compound capable of reversibly intercalating and deintercalating lithium ions, sodium ions, or potassium ions. For example, lithium, sodium or potassium compounds used as positive electrode active materials may have a layered structure, a crystal structure or a combination of these. Further, in the present specification, lithium compound may be a concept that encompasses all compounds in which auxiliary elements, coating elements and doping elements are introduced or substituted with the main active element. The main active element may include one or more selected from the group consisting of, for example, nickel (Ni), cobalt (Co), manganese (Mn), and aluminum (Al). Auxiliary elements, coating elements and doping elements are elements that may be combined with the main active element to improve the structural and chemical stability of the positive electrode active material, and may be distinguished according to the way they are combined with the main active element. Here, being combined with the main active element may include chemical bonding with the main active element as well as existing on the surface of the positive electrode active material or penetrating from the surface. Further, each of the auxiliary elements, the coating elements and the doping elements may independently include at least one selected from the group consisting of group 1 elements, group 2 elements, group 13 elements, group 14 elements, group 15 elements, group 16 elements, and transition metals, excluding lithium, in the periodic table. Specifically, for example, each of the auxiliary elements, the coating elements and the doping elements may independently include at least one selected from the group consisting of sodium (Na), magnesium (Mg), calcium (Ca), yttrium (Y), titanium (Ti), hafnium (Hf), vanadium (V), niobium (Nb), tantalum (Ta), chromium (Cr), molybdenum (Mo), tungsten (W), iron (Fe), copper (Cu), silver (Ag), zinc (Zn), boron (B), gallium (Ga), carbon (C), silicon (Si), tin (Sn), strontium (Sr), barium (Ba), radium (Ra), phosphorus (P) and zirconium (Zr). For example, the positive electrode active material may include at least one selected from the group consisting of nickel-cobalt-manganese oxide (NCM), nickel-cobalt-aluminum oxide (NCA), nickel-cobalt-manganese-aluminum oxide (NCMA), cobalt oxide (LCO), manganese oxide (LMO), and iron phosphate (LFP) combined with lithium, sodium or potassium.

According to one exemplary embodiment, the positive electrode active material may include a sulfur compound. The sulfur compound may include at least one of elemental sulfur ($S_8$), an organosulfur compound $Li_2S_x$ (x is, for example, 1 to 8), and a carbon-sulfur polymer $((C_2S_y)_n$, y=2.5 to 50, n is 1 to 1,000 or less, 1 to 100 or less, or 1 to 50 or less). When the positive electrode active material contains a sulfur compound, the electrode assembly 1 may be applied to a lithium-sulfur (Li-S) battery.

A positive electrode binder according to one exemplary embodiment may include a compound that may improve the internal bonding strength of the positive electrode active material layer and improve the adhesion strength of the positive electrode active material layer to the positive electrode collector. The positive electrode binder may include one or more selected from the group consisting of, for example, polyvinylidene fluoride (PVDF), polyvinyl alcohol, styrene butadiene rubber, (SBR), polyethylene oxide, carboxyl methyl cellulose (CMC), cellulose acetate, cellulose acetate butylate, cellulose acetate propionate, cyanoethyl pullulan, cyanoethyl polyvinyl alcohol, cyanoethyl cellulose, cyanoethyl sucrose, pullulan, polymethylmethacrylate, polybutyl acrylate, polyacrylonitrile, polyvinylpyrrolidone, polyvinyl acetate, polyethylene-co-vinyl acetate and polyarylate.

The conductive agent according to one exemplary embodiment may include a compound that may enhance the conductivity and mobility of ions or electrons of the positive electrode active material layer. The conductive agent may include, for example, a carbon-based conductive agent such as graphite, carbon black, acetylene black, Ketjen black, graphene, carbon nanotube (CNT), vapor-grown carbon fiber (VGCF), and carbon fiber, and/or a metal-based conductive agent including perovskite materials such as tin, tin oxide, titanium oxide, $LaSrCoO_3$, and $LaSrMnO_3$. The carbon nanotubes (CNTs) may include one or more selected from the group consisting of Multi-Walled Nanotubes (MWCNTs) and Single-Walled Nanotubes (SWCNTs) depending on the number of walls.

According to the exemplary embodiment, the separators 21 and 22 may indicate that a membrane is provided in the form of a sheet to prevent an electrical short between the positive electrode (cathode) and the negative electrode (anode) and to allow an electron transport material to pass through. Here, the electron transport material may be, for example, lithium ions ($Li^+$), sodium ions ($Na^+$), or potassium ions ($K^+$). The separators 21 and 22 are not particularly limited as long as they are used in the art, and it is desirable that the separators 21 and 22 have low resistance to ion movement of the electrolyte and excellent wettability of the electrolyte (especially, the electrolyte solution). For each of the separators 21 and 22, independently used may be a porous polymer film, for example, a porous polymer film manufactured from a polyolefin material such as an ethylene polymer, a propylene polymer, an ethylene/butene copolymer, an ethylene/hexene copolymer or an ethylene/methacrylate copolymer, or a laminated structure of two or more layers thereof.

The negative electrode structure 10A may be formed by the negative electrode 10 (or the negative electrode sheet 10S) according to the exemplary embodiment of the present application. For example, the negative electrode 10 (or the negative electrode sheet 10S) forming the negative electrode structure 10A may include the first metal layer 100 and the second metal layer 200 bonded and formed by overlapping with a portion of one edge of the first metal layer 100. For example, the negative electrode 10 (or the negative electrode sheet 10S) forming the negative electrode structure 10A may be interposed between the two separators 21 and 22, as illustrated in FIG. 36. According to one exemplary embodiment, the negative electrode 10 (or the negative electrode sheet 10S) may include a plurality of second metal layers 200, and the first metal layer 100 may be interposed between the plurality of second metal layers 200. The negative electrode 10 (or the negative electrode sheet 10S) according to another exemplary embodiment may include a plurality of first metal layers 100, and the second metal layer 200 may be interposed between the plurality of first metal layers 100.

The electrode assembly 1 according to an exemplary embodiment may be manufactured by, for example, zigzag-bending the negative electrode structure 10A (folding) and then inserting the positive electrode 30 cut to an appropriate size into the space formed by the bending. The negative electrode 10 (or the negative electrode sheet 10S) forming the negative electrode structure 10A includes the first metal layer 100, and thus, due to its soft nature, curved shape may be generated.

The positive electrode 30 is not easy to fold compared to the negative electrode structure 10A and is relatively easy to cut, and thus the positive electrode 30 may be cut to an appropriate size and used as described above.

Meanwhile, the negative electrode structure 10A including the negative electrode 10 in the form of a sheet forms a bend, appropriate number of positive electrodes 30 are inserted between the surfaces formed by the bending, and the cut is performed within an appropriate range. For example, referring to FIG. 36, the individual electrode assemblies 1 may be manufactured by inserting four positive electrodes 30 so that the negative electrode structure 10A to be completely surround the positive electrodes 30 and by cutting both ends of the negative electrode structure 10A.

The negative electrode structure 10A according to an exemplary embodiment may include the stack part 10A_S and a folded part 10A_F. A plurality of stack parts 10A_S may be prepared, and a plurality of folded parts 10A_F may be prepared. The stack parts 10A_S may form a structure stacked with the inserted positive electrodes 30, and the folded parts 10A_F may indicate the region where the negative electrode structure 10A is folded. The electrode assembly 1 may have a structure in which the stack part 10A_S of the negative electrode structure 10A and the positive electrode 30 are sequentially stacked alternately.

The electrode assembly 1 according to the exemplary embodiment is not limited to the above-described method and may be assembled in various ways. For example, the electrode assembly 1 may be assembled in a manner where after manufacturing a mono-cell (mono-cell) in which the negative electrode 10 (for example, each negative electrode 10 shown in FIG. 11, FIG. 23, and FIG. 35), a separator and a positive electrode are sequentially stacked, or a bi-cell (bi-cell) in which the negative electrode 10 (for example, each negative electrode 10 shown in FIG. 11, FIG. 23, and FIG. 35), a separator and a positive electrode are sequentially stacked, a half-cell (half-cell) is attached to a mono-cell or bi-cell, in which a separator, the negative electrode 10 and separator are sequentially stacked, and mono-cells or bi-cells are repeatedly stacked until reach the half-cell that is attached. Further, for example, the electrode assembly 1 may be assembled by stacking negative electrodes 10 (for example, each negative electrode 10 shown in FIG. 11, FIG. 23 and FIG. 35) and positive electrodes alternately in a zigzag pattern between long sheet-shaped separators. Even in the case of the assembly method described above, the negative electrode 10 may minimize the double-layer phenomenon due to its unique structure, and appearance damage may be reduced while stacking. A battery cell may be manufactured by embedding the electrode assembly 1 according to an exemplary embodiment into a case together with an electrolyte. Further, battery cells may be used to manufacture battery modules, battery packs, or energy storage devices.

In an exemplary embodiment, the battery cell may include a case housing the electrode assembly 1. Further, a battery cell may contain an electrolyte within its case. The electrolyte may contain one or more substances, either solid or liquid, at room temperature and pressure. For example, the electrolyte may include liquid substances. The electrolyte may include conductive salts and solvents.

The conductive salt may contain an electron transport material. The conductive salt may include one or more of, for example, MC1, MBr, MI, $MClO_4$, $MBF_4$, $MB_{10}Cl_{10}$, $MB(Ph)_4$ (Ph is phenyl group), $MC_4BO_8$, $MPF_6$, $MCF_3SO_3$, $MCF_3CO_2$, $MAsF_6$, $MSbF_6$, $MAlCl_4$, $MSO_3CH_3$, $MSO_3CF_3$, MSCN, $MC(CF_3SO_2)_3$, $MN(CF_3SO_2)_2$, $MN(C_2F_5SO_2)_2$, $MN(SO_2F)_2$, chloroborane metal (M), lower aliphatic carboxylic acid metal (M), tetraphenyl borate metal (M) and metal (M) imide, but is not particularly limited as long as it is easily dissolve in an organic solvent. Metal (M) is one of lithium (Li), sodium (Na), and potassium (K). The concentration of conductive salt may vary from 0.1 to 10 M depending on several factors such as solubility of salt, conductivity of dissolved salt, charge and discharge conditions of the battery, operating temperature and other factors known in the field of lithium secondary batteries.

The solvent may include one or more of a carbonate solvent, an ether solvent, and an ester solvent. The electrolyte may further contain a suitable solvent, taking into account the appropriate viscosity and electrical conductivity.

The carbonate solvent may include one or more of a cyclic carbonate solvent and a linear carbonate solvent. The cyclic carbonate solvent may contain one or more of, for example, ethylene carbonate (EC), propylene carbonate (PC), 1,2-butylene carbonate (1,2-BC), 2,3-butylene carbonate (2,3-BC), 1,2-pentylene carbonate (1,2-PTC), 2,3-pentylene carbonate (2,3-PTC) and vinylene carbonate (VC). The linear carbonate solvents may contain one or more of, for example, methyl carbonate, ethyl carbonate, dimethyl carbonate (DMC), diethyl carbonate (DEC), dipropyl carbonate (DPC), ethylmethyl carbonate (EMC), methylpropyl carbonate (MPC) and ethylpropyl carbonate (EPC).

Ether solvent may contain one or more of dimethyl ether, diethyl ether, dipropyl ether, methylethyl ether, methylpropyl ether and ethylpropyl ether.

The ester solvent may include one or more of a linear ester solvent and a cyclic ester solvent. For example, the linear ester compound may contain one or more of methyl acetate, ethyl acetate, propyl acetate, methyl propionate, ethyl propionate, propyl propionate and butyl propionate. Further, for example, the cyclic ester compound may include, for example, one or more of gamma- butyrolactone, gamma-valerolactone, gamma-caprolactone, sigma-valerolactone and epsilon-caprolactone.

In an exemplary embodiment, the electrolyte may, in some cases, contain the aforementioned sulfur compound. In another exemplary embodiment, the electrolyte may additionally contain nitric or nitrite compounds in some cases. For example, the nitric or nitrite compound is not particularly limited, but may include one or more of inorganic nitric or nitrous acid compounds such as lithium nitrate ($LiNO_3$), potassium nitrate ($KNO_3$), cesium nitrate ($CsNO_3$), barium nitrate ($Ba(NO_3)_2$), ammonium nitrate ($NH_4NO_3$), lithium nitrite ($LiNO_2$), potassium nitrite ($KNO_2$), cesium nitrite ($CsNO_2$), and ammonium nitrite ($NH_4NO_2$); organic nitric or nitrous acid compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite; and organic nitro compounds such as nitromethane, nitropropane, nitrobutane, nitrobenzene, dinitrobenzene, nitropyridine, dinitropyridine, nitrotoluene and dinitrotoluene.

Further, in an exemplary embodiment, in some cases, electrolytes may additionally contain other additives to improve charge/discharge characteristics or flame retardancy. Other additives may include, but are not limited to, one or more of for example, pyridine, triethylphosphite, triethanolamine, cyclic ethers, ethylenediamine, n-glyme, hexaphosphoric acid triamide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxyethanol, aluminum trichloride, fluoroethylene carbonate (FEC) and propene sultone (PRS).

The negative electrode 10, the negative electrode sheet 10S, and the electrode assembly 1 according to one exemplary embodiment of the present application may be widely applied to green technology fields such as electric vehicles, battery charging stations, and other solar and wind power generation using batteries. Further, the negative electrode 10, the negative electrode sheet 10S, and the electrode assembly 1 according to one exemplary embodiment of the present application may be applied to eco-friendly electric vehicles or hybrid vehicles to prevent climate change by suppressing air pollution and greenhouse gas emissions.

In the above, various embodiments of the present disclosure are described in detail. However, it will be apparent to those with average knowledge in the technical field that scope of rights of this disclosure is not limited thereto, and various modifications and variations are possible without departing from the technical spirit of the present disclosure as set forth in the claims. Further, the above-described exemplary embodiment may be implemented with some elements deleted, and each exemplary embodiment may be implemented in combination with each other.

[Description of Symbols]

1... Electrode assembly
10... Negative electrode
10S... Negative electrode sheet
100... First metal layer
100a... 1-1 metal layer
100b... 1-2 metal layer
200... Second metal layer
200a... 2-1 metal layer
200b... 2-2 metal layer
210... First region
220... Second region
230... Negative electrode tab

## Claims

1. A negative electrode comprising:

   a first metal layer formed from lithium metal; and
   a plurality of second metal layers that are formed from a material other than the lithium metal, and bonded and formed by overlapping with a portion of the first metal layer,
   wherein the first metal layer is interposed between the plurality of second metal layers.

2. The negative electrode of claim 1,
   wherein the plurality of second metal layers are formed of a metal having lower reactivity than the lithium metal.

3. The negative electrode of claim 1,

   wherein each of the plurality of second metal layers comprises a first region overlapping with the first metal layer and a second region that is a region other than the first region,

wherein at least one of the plurality of second metal layers is formed in order for a width direction length of the first region to be shorter than a width direction length of the second region.

4. The negative electrode of claim 3,
wherein a first region of at least one of the plurality of second metal layers is embedded in the first metal layer.

5. The negative electrode of claim 3,
wherein first regions of the plurality of second metal layers have a width direction length practically identical to each other.

6. The negative electrode of claim 3,
comprising a negative electrode tab that is formed in at a second region of at least one of the plurality of second metal layers.

7. The negative electrode of claim 6,
comprising a margin region that is a region other than a region corresponding to the negative electrode tab at the second region of the at least one of the plurality of second metal layers.

8. A negative electrode comprising:

a plurality of first metal layers that are formed from lithium metal;
a second metal layer that is formed from a material other than the lithium metal, comprises a first region overlapping with at least one of the plurality of first metal layers and a second region that is a region other than the first region, is interposed between the plurality of first metal layers, and is bonded and formed with the plurality of first metal layers; and
a margin region that is provided to be adjacent to at least one of the plurality of first metal layers in the second region.

9. The negative electrode of claim 8,
wherein the second metal layer is formed of a metal having lower reactivity than the lithium metal.

10. The negative electrode of claim 8,
further comprising a negative electrode tab that is formed in the second region.

11. The negative electrode of claim 10,
wherein, when viewed from a thickness direction of one of the first metal layers, at least a portion of the margin region is provided between the negative electrode tab and the one of the first metal layers, or provided between the negative electrode tab and the first region.

12. The negative electrode of claim 8,
wherein at least a portion of the first region comprises one or more of a predetermined pattern structure and a surface-treated region.

13. The negative electrode of claim 8,
wherein a width direction length of the first region is formed shorter than a width direction length of the second region.

14. A negative electrode sheet comprising:

a first metal layer;
and a second metal layer that is bonded and formed by overlapping with a portion of one edge of the first metal layer,
wherein the second metal layer comprises a first region overlapping the first metal layer and a second region that is a region other than the first region, and
wherein a negative electrode tab comprising a first tab, a second tab and a third tab is formed in the second region, each of the second tab and the third tab that are adjacent to each other on both sides based on the first tab is positioned a predetermined distance apart from the first tab, and a first length that is a gap between the first tab and the second tab is formed longer than a second length between the first tab and the third tab.

15. The negative electrode sheet of claim 14,
wherein the second metal layer is formed of a metal material having lower reactivity than the first metal layer.

16. An electrode assembly
comprising:

a positive electrode, a negative electrode and a separator,
wherein the negative electrode comprises a first metal layer that is formed from lithium metal and a second metal layer that is bonded and formed by overlapping with a portion of one edge of the first metal layer, wherein the second metal layer is formed of a metal having lower reactivity than the lithium metal, and the negative electrode forms a negative electrode structure by being interposed between two of the separators,
wherein the negative electrode structure comprises a stack part and a folded part, and
comprising a structure in which the stack part and the positive electrode are stacked sequentially and alternately.

17. The electrode assembly of claim 16,
wherein a plurality of stack parts and a plurality of folded parts are provided.

18. The electrode assembly of claim 16,
wherein the negative electrode comprises a plurality of second metal layers, and the first metal layer is interposed between the plurality of second metal layers.

19. The electrode assembly of claim 16,

wherein the negative electrode comprises a plurality of first metal layers,
and the second metal layer is interposed between the plurality of first metal layers.

20. The electrode assembly of claim 16,

wherein the positive electrode comprises a positive electrode active material layer comprising a positive electrode active material and a positive electrode collector configured to support the positive electrode active material layer, and
wherein the positive electrode active material comprises a sulfur compound.

EP 4 765 233 A1

## FIG. 1

FIG. 2

EP 4 765 233 A1

FIG. 3

FIG. 4

FIG. 5

# FIG. 6

EP 4 765 233 A1

# FIG. 7

EP 4 765 233 A1

FIG. 8

EP 4 765 233 A1

# FIG. 9

EP 4 765 233 A1

# FIG. 10

EP 4 765 233 A1

EP 4 765 233 A1

FIG. 11

# FIG. 12

EP 4 765 233 A1

FIG. 13

EP 4 765 233 A1

# FIG. 14

FIG. 15

EP 4 765 233 A1

# FIG. 16

EP 4 765 233 A1

# FIG. 17

EP 4 765 233 A1

# FIG. 18

EP 4 765 233 A1

## FIG. 19

EP 4 765 233 A1

FIG. 20

# FIG. 21

EP 4 765 233 A1

FIG. 22

EP 4 765 233 A1

FIG. 23

# FIG. 24

EP 4 765 233 A1

FIG. 25

FIG. 26

EP 4 765 233 A1

# FIG. 27

FIG. 28

EP 4 765 233 A1

FIG. 29

EP 4 765 233 A1

# FIG. 30

EP 4 765 233 A1

# FIG. 31

10S

100 { 100a, 100b

CL

200

Z
Y
X

EP 4 765 233 A1

# FIG. 32

EP 4 765 233 A1

# FIG. 33

# FIG. 34

EP 4 765 233 A1

# FIG. 35

FIG. 36

EP 4 765 233 A1

## INTERNATIONAL SEARCH REPORT

| International application No. |
| --- |
| **PCT/KR2025/006846** |

| A. | CLASSIFICATION OF SUBJECT MATTER |
| --- | --- |

**H01M 4/134**(2010.01)i; **H01M 4/1395**(2010.01)i; **H01M 4/38**(2006.01)i; **H01M 4/58**(2010.01)i; **H01M 10/052**(2010.01)i; **H01M 10/42**(2006.01)i; **H01M 10/0583**(2010.01)i; **H01M 50/531**(2021.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/134(2010.01); H01M 10/04(2006.01); H01M 50/107(2021.01); H01M 50/533(2021.01); H01M 50/534(2021.01); H01M 50/536(2021.01); H01M 50/54(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 조립체(electrode assembly), 음극(anode), 리튬 금속(lithium metal), 금속층(metal layer), 중첩(overlapping), 돌출(protrusion), 탭(tab)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2019-0040799 A (LG CHEM, LTD.) 19 April 2019 (2019-04-19)<br>claims 1, 10-12; paragraphs [0052]-[0055], [0081]-[0086]; figures 3-5 | 1-20 |
| Y | CN 115832634 A (NINGDE CONTEMPORARY AMPEREX TECHNOLOGY CO., LTD.) 21 March 2023 (2023-03-21)<br>claims 1, 3; figures 2, 3-1 | 1-13,18,19 |
| Y | KR 10-2022-0113329 A (LG ENERGY SOLUTION, LTD.) 12 August 2022 (2022-08-12)<br>claims 1, 4, 15, 26, 27; paragraphs [0246], [0256], [0296]; figures 7b, 7e | 7-15 |
| Y | KR 10-2024-0056427 A (LG ENERGY SOLUTION, LTD.) 30 April 2024 (2024-04-30)<br>claim 1; figure 2 | 16-20 |
| A | CN 112821013 A (XIAMEN HAICHEN NEW MATERIAL TECHNOLOGY CO., LTD.) 18 May 2021 (2021-05-18)<br>abstract; claims 1-10 | 1-20 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 August 2025** | **20 August 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/006846**

| Patent document cited in search report | | | Publication date (day/month/year) | Patent family member(s) | | | Publication date (day/month/year) |
|---|---|---|---|---|---|---|---|
| KR | 10-2019-0040799 | A | 19 April 2019 | KR | 10-2436414 | B1 | 24 August 2022 |
| CN | 115832634 | A | 21 March 2023 | EP | 4411972 | A1 | 07 August 2024 |
| | | | | US | 2024-0291118 | A1 | 29 August 2024 |
| | | | | WO | 2023-241159 | A1 | 21 December 2023 |
| KR | 10-2022-0113329 | A | 12 August 2022 | CN | 114824413 | A | 29 July 2022 |
| | | | | CN | 114864857 | A | 05 August 2022 |
| | | | | CN | 114864956 | A | 05 August 2022 |
| | | | | CN | 114865053 | A | 05 August 2022 |
| | | | | CN | 114865054 | A | 05 August 2022 |
| | | | | CN | 114865174 | A | 05 August 2022 |
| | | | | CN | 114865242 | A | 05 August 2022 |
| | | | | CN | 114865242 | B | 24 January 2025 |
| | | | | CN | 115000339 | A | 02 September 2022 |
| | | | | CN | 119812692 | A | 11 April 2025 |
| | | | | CN | 217239510 | U | 19 August 2022 |
| | | | | CN | 217239523 | U | 19 August 2022 |
| | | | | CN | 217239536 | U | 19 August 2022 |
| | | | | CN | 217239587 | U | 19 August 2022 |
| | | | | CN | 217655909 | U | 25 October 2022 |
| | | | | CN | 217655927 | U | 25 October 2022 |
| | | | | CN | 217740748 | U | 04 November 2022 |
| | | | | CN | 218182246 | U | 30 December 2022 |
| | | | | EP | 4044332 | A2 | 17 August 2022 |
| | | | | EP | 4044332 | A3 | 07 September 2022 |
| | | | | EP | 4044334 | A2 | 17 August 2022 |
| | | | | EP | 4044334 | A3 | 31 August 2022 |
| | | | | EP | 4044336 | A2 | 17 August 2022 |
| | | | | EP | 4044336 | A3 | 31 August 2022 |
| | | | | EP | 4044336 | B1 | 06 March 2024 |
| | | | | EP | 4044358 | A2 | 17 August 2022 |
| | | | | EP | 4044358 | A3 | 31 August 2022 |
| | | | | EP | 4044358 | B1 | 06 March 2024 |
| | | | | EP | 4047702 | A1 | 24 August 2022 |
| | | | | EP | 4047702 | B1 | 05 June 2024 |
| | | | | EP | 4047703 | A2 | 24 August 2022 |
| | | | | EP | 4047703 | A3 | 07 September 2022 |
| | | | | EP | 4047703 | B1 | 03 January 2024 |
| | | | | EP | 4047725 | A2 | 24 August 2022 |
| | | | | EP | 4047725 | A3 | 31 August 2022 |
| | | | | EP | 4047725 | B1 | 10 January 2024 |
| | | | | EP | 4228082 | A2 | 16 August 2023 |
| | | | | EP | 4228082 | A4 | 12 March 2025 |
| | | | | EP | 4239784 | A2 | 06 September 2023 |
| | | | | EP | 4239784 | A4 | 25 December 2024 |
| | | | | EP | 4243195 | A2 | 13 September 2023 |
| | | | | EP | 4243195 | A4 | 16 July 2025 |
| | | | | EP | 4250469 | A2 | 27 September 2023 |
| | | | | EP | 4250469 | A4 | 02 April 2025 |
| | | | | EP | 4311013 | A2 | 24 January 2024 |
| | | | | EP | 4311013 | A3 | 21 February 2024 |

Form PCT/ISA/210 (patent family annex) (July 2022)

**INTERNATIONAL SEARCH REPORT**
Information on patent family members

International application No.

**PCT/KR2025/006846**

| Patent document cited in search report | Publication date (day/month/year) | Patent family member(s) | | Publication date (day/month/year) |
|---|---|---|---|---|
| | | EP | 4312301 A2 | 31 January 2024 |
| | | EP | 4312301 A3 | 28 February 2024 |
| | | EP | 4312301 B1 | 13 August 2025 |
| | | EP | 4318699 A2 | 07 February 2024 |
| | | EP | 4318699 A3 | 28 February 2024 |
| | | EP | 4325652 A2 | 21 February 2024 |
| | | EP | 4325652 A3 | 28 February 2024 |
| | | EP | 4376211 A1 | 29 May 2024 |
| | | EP | 4553974 A2 | 14 May 2025 |
| | | JP | 2023-549148 A | 22 November 2023 |
| | | JP | 2023-549378 A | 24 November 2023 |
| | | JP | 2023-549770 A | 29 November 2023 |
| | | JP | 2023-550338 A | 01 December 2023 |
| | | JP | 2023-551123 A | 07 December 2023 |
| | | JP | 2023-551128 A | 07 December 2023 |
| | | JP | 2024-500131 A | 04 January 2024 |
| | | JP | 2024-501458 A | 12 January 2024 |
| | | JP | 7642807 B2 | 10 March 2025 |
| | | JP | 7645373 B2 | 13 March 2025 |
| | | JP | 7662782 B2 | 15 April 2025 |
| | | JP | 7670830 B2 | 30 April 2025 |
| | | KR | 10-2022-0105141 A | 26 July 2022 |
| | | KR | 10-2022-0105142 A | 26 July 2022 |
| | | KR | 10-2022-0105143 A | 26 July 2022 |
| | | KR | 10-2022-0105144 A | 26 July 2022 |
| | | KR | 10-2022-0105145 A | 26 July 2022 |
| | | KR | 10-2022-0105146 A | 26 July 2022 |
| | | KR | 10-2022-0105147 A | 26 July 2022 |
| | | KR | 10-2022-0105148 A | 26 July 2022 |
| | | KR | 10-2022-0107131 A | 02 August 2022 |
| | | KR | 10-2022-0107132 A | 02 August 2022 |
| | | KR | 10-2022-0107133 A | 02 August 2022 |
| | | KR | 10-2022-0108011 A | 02 August 2022 |
| | | KR | 10-2022-0108012 A | 02 August 2022 |
| | | KR | 10-2022-0113654 A | 16 August 2022 |
| | | KR | 10-2022-0123354 A | 06 September 2022 |
| | | KR | 10-2024-0096443 A | 26 June 2024 |
| | | KR | 10-2025-0058722 A | 30 April 2025 |
| | | KR | 10-2437061 B1 | 26 August 2022 |
| | | KR | 10-2438158 B1 | 30 August 2022 |
| | | KR | 10-2444337 B1 | 16 September 2022 |
| | | KR | 10-2446351 B1 | 22 September 2022 |
| | | KR | 10-2446797 B1 | 26 September 2022 |
| | | KR | 10-2448822 B1 | 29 September 2022 |
| | | KR | 10-2448987 B1 | 29 September 2022 |
| | | KR | 10-2448988 B1 | 29 September 2022 |
| | | US | 12136706 B2 | 05 November 2024 |
| | | US | 12142734 B2 | 12 November 2024 |
| | | US | 2022-0231345 A1 | 21 July 2022 |
| | | US | 2023-0246244 A1 | 03 August 2023 |

Form PCT/ISA/210 (patent family annex) (July 2022)

**INTERNATIONAL SEARCH REPORT**
Information on patent family members

| International application No. |
| --- |
| **PCT/KR2025/006846** |

| Patent document cited in search report | | | Publication date (day/month/year) | Patent family member(s) | | | Publication date (day/month/year) |
| --- | --- | --- | --- | --- | --- | --- | --- |
| | | | | US | 2024-0021958 | A1 | 18 January 2024 |
| | | | | US | 2024-0128517 | A1 | 18 April 2024 |
| | | | | US | 2024-0136674 | A1 | 25 April 2024 |
| | | | | US | 2024-0266611 | A1 | 08 August 2024 |
| | | | | US | 2024-0304870 | A1 | 12 September 2024 |
| | | | | US | 2024-0322399 | A1 | 26 September 2024 |
| | | | | WO | 2022-158857 | A2 | 28 July 2022 |
| | | | | WO | 2022-158857 | A3 | 15 September 2022 |
| | | | | WO | 2022-158858 | A2 | 28 July 2022 |
| | | | | WO | 2022-158858 | A3 | 15 September 2022 |
| | | | | WO | 2022-158859 | A2 | 28 July 2022 |
| | | | | WO | 2022-158859 | A3 | 15 September 2022 |
| | | | | WO | 2022-158860 | A2 | 28 July 2022 |
| | | | | WO | 2022-158860 | A3 | 15 September 2022 |
| | | | | WO | 2022-158861 | A2 | 28 July 2022 |
| | | | | WO | 2022-158861 | A3 | 15 September 2022 |
| | | | | WO | 2022-158862 | A2 | 28 July 2022 |
| | | | | WO | 2022-158862 | A3 | 15 September 2022 |
| | | | | WO | 2022-158863 | A2 | 28 July 2022 |
| | | | | WO | 2022-158863 | A3 | 15 September 2022 |
| | | | | WO | 2022-158864 | A2 | 28 July 2022 |
| | | | | WO | 2022-158864 | A3 | 15 September 2022 |
| KR | 10-2024-0056427 | A | 30 April 2024 | CN | 119318052 | A | 14 January 2025 |
| | | | | CN | 119487668 | A | 18 February 2025 |
| | | | | CN | 119487669 | A | 18 February 2025 |
| | | | | EP | 4496063 | A1 | 22 January 2025 |
| | | | | EP | 4517907 | A1 | 05 March 2025 |
| | | | | EP | 4517908 | A1 | 05 March 2025 |
| | | | | JP | 2025-520613 | A | 03 July 2025 |
| | | | | JP | 2025-520669 | A | 03 July 2025 |
| | | | | JP | 2025-521667 | A | 10 July 2025 |
| | | | | KR | 10-2024-0056394 | A | 30 April 2024 |
| | | | | KR | 10-2024-0056395 | A | 30 April 2024 |
| | | | | KR | 10-2024-0056396 | A | 30 April 2024 |
| | | | | KR | 10-2837704 | B1 | 23 July 2025 |
| | | | | KR | 10-2837705 | B1 | 23 July 2025 |
| | | | | WO | 2024-085719 | A1 | 25 April 2024 |
| | | | | WO | 2024-085720 | A1 | 25 April 2024 |
| | | | | WO | 2024-085721 | A1 | 25 April 2024 |
| CN | 112821013 | A | 18 May 2021 | CN | 112821013 | B | 29 March 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240065416
- KR 1020240094209
- KR 1020250065353